# EUROPEAN PATENT APPLICATION

(11) **EP 1 251 649 A2**
(43) Date of publication of application: **23.10.2002**
(21) Application number: 02008652.6
(22) Date of filing: 17.04.2002
(51) Int. Cl.: H04H 7/00

(54) **Television program distribution system**

(30) Priority: 19.04.2001 JP 2001121714; 17.09.2001 JP 2001282244
(71) Applicant: MATSUSHITA ELECTRIC INDUSTRIAL CO., LTD., Kadoma-shi, Osaka 571-8501 (JP)
(72) Inventor: Tokuda, Hirokazu, Osaka-shi, Osaka-fu 538-0035 (JP); Nishitani, Kazuhiro, Osaka-shi, Osaka-fu 552-0007 (JP); Kajimoto, Kazuo, Yokohama-shi, Kanagawa-ken 226-0015 (JP)
(74) Representative: Grünecker, Kinkeldey, Stockmair & Schwanhäusser Anwaltssozietät

(57) **Abstract**

What is provided is: a) a program production apparatus for producing a secondary program that is intended for distribution and is based on an original program produced in advanced; and b) a program distribution system that includes this program production apparatus. For every image scene that makes up the original program, the program production apparatus has corresponding scene data stored within it that includes usage restriction information, this information indicating whether the image scene in question is permitted to be distributed along specified distribution routes. After receiving inputs from the producer of the secondary program that indicate a preferred distribution route for the secondary program, the program production apparatus compares these inputs with the usage restriction information to determine whether each scene is permitted to be distributed along the requested distribution route. Finally, the program production unit produces the secondary program using only the scenes that are permitted.

## Description

This application is based on application No. 2001-121714 and 2001-282244 filed in Japan, the contents of which are hereby incorporated by reference.

### BACKGROUND OF THE INVENTION

### (1) Field of the Invention

The present invention relates to program production technology and program distribution technology that, using an original program produced in advance, respectively produce and distribute a program intended for distribution.

### (2) Description of Related Art

Presently, services exist for the purpose of using a program intended for television broadcasting to produce a program intended for distribution (hereinafter referred to as a distribution program) that is distributed to privately owned personal computers (hereinafter referred to as PCs) or mobile phones via the internet.

A program intended for television broadcasting is produced in the following manner.

First of all, the camera operator captures a plurality of units of image data. Then, the producer of the program selects from this plurality of units of image data those needed to make up the program. Finally, by combining this selected image data, he or she completes the process of producing the program to be broadcast.

With the above production method, there exist copyright holders (individuals who can claim copyrights) for each unit of image data captured by the camera operator, meaning that within every produced television program there exists copyright holders for every image scene. And among this plurality of copyright holders there are likely to be those who would not permit their copyrighted material to be distributed to PCs or mobile phones.

Consequently, the producer of the distribution program created from this television broadcast program must visually check each image scene to determine whether that particular image scene can be used. This need for visual checks places a great burden on the producer of the distribution program and, furthermore, it creates a high likelihood for error on the part of the producer.

### SUMMARY OF THE INVENTION

To address the above issues, an object of the present invention is to provide: a) a program production subsystem for, when a distribution program is being produced using television broadcast program, producing the distribution program without relying on visual inspection by the producer to determine whether each image scene can be used; b) a program distribution subsystem for distributing the program; c) a program reproduction subsystem for reproducing the program; and d) a program distribution system that combines all of the above.

In order to achieve the above-described object, the present invention is a program production apparatus, including: a storage unit that stores, in advance, an original program, the original program including a plurality of image scenes and a set of usage information for each of the image scenes; and a production unit that produces a distribution program by selecting, in accordance with the set of usage information, one or more image scenes from the original program, wherein the set of usage information includes one of a) whether the corresponding image scene is permitted to be distributed to specified distribution routes and b) whether the corresponding image scene is permitted to be distributed to specified distribution destinations.

With this arrangement, the present invention can produce a distribution program without a visual inspection by the producer. This can be done because, since the usage restrictions for each image scene are predetermined, the present invention is capable of determining the appropriateness of secondary distribution of each image scene within an original program.

Here, the usage information may includes at least whether the corresponding image scene is permitted to be distributed to specified distribution routes, and the production unit may include: a reception sub-unit that receives route information that indicates a distribution route; a determining sub-unit that refers to the usage information to determine whether each of the image scenes in the original program is permitted to be distributed via the distribution route indicated in the received route information; and a distribution program production sub-unit that produces a distribution program corresponding to the distribution route.

With this arrangement the present invention can, without visual inspection by the program producer, produce a distribution program to be distributed along a distribution route designated by the producer.

Here, the original program may includes a) a plurality of pieces of raw image data, each piece of raw image data including a plurality of segments of image data, and each of one or more of the segments of image data corresponding to one image scene within the original program, and b) an original program structure that includes a plurality of sets of scene data, each set of scene data including i) image data segment identifiers that each identify a segment of image data that makes up an image scene, and ii) the usage information, the determining sub-unit may determine, for each set of scene data, whether the segment of image data identified by the scene identifier is permitted to be distributed, and the distribution program production sub-unit may produce a distribution program, from the original program, composed of a) raw image data to which the segments of image data determined by the determining sub-unit to be permitted to be distributed belong and b) the image data segment identifiers that identify the segments of image data determined by the determining unit to be permitted to be distributed.

With this arrangement, the present invention can, as a result of the usage information of each unit of scene data being predetermined, select from all of the image scenes the image scenes appropriate for distribution.

Here, the program production apparatus may distribute the distribution program to a reproduction apparatus via a distribution apparatus, the usage information stored by the storage unit may be destination restriction information indicating whether distribution of the program to a specified geographic region is permitted, and the production unit may produce the distribution program in accordance with the distribution restriction information.

With this arrangement, the present invention can control the distribution of program that may not be appropriate for religious or customary reasons in certain regions. Such a program specifically suited to certain geographic regions can be produced without visual inspection by the program producer.

Here, the program production apparatus may distribute the distribution program to a reproduction apparatus via a distribution apparatus, the usage information stored by the storage unit may be distribution apparatus restriction information indicating whether each image scene is permitted to be distributed to the distribution apparatus, and the production unit may produce the distribution program in accordance with the distribution apparatus restriction information.

With this arrangement, the present invention can produce, without visual inspection by the program producer, a distribution program to be distributed by a distribution apparatus.

Here, the program production apparatus may distribute the distribution program to a reproduction apparatus via a distribution apparatus and a redistribution apparatus, in the stated order, the usage information stored by the storage unit may be redistribution apparatus restriction information indicating whether each image scene is permitted to be redistributed via the redistribution apparatus, and the production unit may produce the distribution program in accordance with the redistribution apparatus restriction information.

With this arrangement, when limitation is desired of the redistribution of a distribution program to a reproduction apparatus via a redistribution apparatus, the present invention is capable of restricting distribution to that redistribution apparatus.

Here, the original program may further include modification restriction information indicating whether each image scene is permitted to be modified, and the production unit may produce the distribution program in accordance with the modification restriction information and the usage information.

With this arrangement, when it is desired that the quality of the original program not be lost in the distribution of the distribution program, the present invention can produce a program that is strictly made up of image scenes that can be modified.

Here, the original program may further include copy restriction information indicating whether each image scene is permitted to be copied, and the production unit may produce the distribution program in accordance with the copy restriction information and the usage information.

With this arrangement, the present invention can, without visual inspection by the program producer, produce a program for distribution comprised on only of contents that are permitted to be copied.

Furthermore, the present invention is a program distribution apparatus that receives a distribution program made up of one or more image scenes, produces a program for reproduction from the received distribution program, and distributes the produced program for reproduction, including: a reception unit that receives the distribution program, the distribution program including, for each scene, flag information showing whether the scene is permitted to be reproduced; a production unit that produces the program for reproduction by selecting, in accordance with the flag information, image scenes from the distribution program; and a transmission unit that transmits the produced program for reproduction to a reproduction apparatus.

With this arrangement, there is predetermined reproduction permission information included in every unit of scene data, and the present invention selects image scenes in accordance with this reproduction permission information. This is another way in which the present invention is capable of producing distribution program without visual inspection by the program producer.

Here, the distribution program may further includes a) a plurality of pieces of raw image data, each piece of raw image data including a plurality of segments of image data, and each of one or more segments corresponding to one image scene within the distribution program, and b) a distribution program structure that includes a plurality of image data segment identifiers, each image data identifier i) identifying a segment of image data and ii) including the flag information, and the production unit may includes: a determining sub-unit that uses the flag information to determine whether the segments of image data identified by the image data segment identifiers are permitted to be reproduced; and an output sub-unit that outputs the segments of image data determined to be permitted to be reproduced.

With this arrangement, the predetermined flag information included in every unit of scene data makes it possible to output image data for every image scene.

Here, the distribution program may further include a) a plurality of pieces of raw image data, each piece of raw image data including a plurality of segments of image data, and each of one or more segments corresponding to one image scene within the distribution program, and b) a distribution program structure that includes a plurality of image data segment identifiers, each image data segment identifier i) identifying a segment of image data and ii) including the flag information, and the production unit may include: a determining sub-unit that uses the flag information to determine whether the segments of image data identified by the image data segment identifiers are permitted to be reproduced; and an output sub-unit that outputs a) raw image data that includes the segments of image data determined to be permitted to be reproduced and b) the image data segment identifiers that identify the segments of image data determined to be permitted to be reproduced.

With this arrangement, the predetermined flag information included in every unit of scene data makes it possible to output image data and scene data for every image scene.

Here, the distribution program may further include modification restriction information indicating whether each image scene is permitted to be modified, and the production unit produces the distribution program in accordance with the modification restriction information and the flag information.

With this arrangement, when it is desired that the quality of the original program not be lost in the production of the reproduction program, the present invention can produce reproduction program that is strictly made up of image scenes that can be modified.

Furthermore, the present invention is a program reproduction apparatus that receives, from a program distribution apparatus, a distribution program that is made up of a plurality of image scenes, and reproduces the received distribution program, the distribution program including a) a plurality of pieces of raw image data, each piece of raw image data including a plurality of segments of image data, and each of one or more segments corresponding to one image scene within the distribution program and b) a distribution program structure that includes a plurality of sets of scene data, each set of scene data including i) a plurality of image data segment identifiers that each identify one of the segments of image data, and ii) flag information indicating whether the identified segment of image data is permitted to be reproduced, and the program reproduction apparatus including: a reception unit that receives the distribution program from the program distribution apparatus; a determining unit that uses the flag information to determine whether the segments of image data identified by the image data segment identifiers are permitted to be reproduced; and a reproduction unit that reproduces the segments of image data determined to be permitted to be reproduced.

With this arrangement, the predetermined flag information included in every unit of scene data makes it possible for the appropriateness of the reproduction of each image scene to be determined, further making it possible for the present invention to produce selected segments of image data.

Here, the distribution program structure may further include copy restriction information indicating whether each image scene is permitted to be copied to a another program reproduction apparatus, and the program apparatus further includes: a copy prohibiting unit that, in accordance with the copy restriction information, prohibits copying to another program reproduction apparatus.

With this arrangement, the present invention can control the distribution of copies to other apparatuses.

### BRIEF DESCRIPTION OF THE DRAWINGS

These and other objects, advantages and features of the invention will become apparent from the following description thereof taken in conjunction with the accompanying drawings which illustrate a specific embodiment of the invention.

In the drawings:
FIG. 1 is a drawing showing the structure of program distribution system 10;
FIG. 2 is a block drawing showing the structure of program production subsystem 20;
FIG. 3 is a drawing showing the structure of broadcast program structure 30 that is stored within program structure storage unit 201 of media asset management apparatus 101;
FIG. 4 is a drawing showing the structure of distribution program structure 40 produced by control unit 244 of distribution program production apparatus 102;
FIG. 5 is a drawing showing the structure of a) image data storage unit 291 within image data provider apparatus 291 and b) image data storage unit 291a and image data storage unit 291b, both connected to image data provider apparatus 103 via a LAN;
FIG. 6 is a block drawing showing the structure of PC distribution subsystem 106;
FIG. 7 is a drawing showing the structure of sequence group 50 produced by program production unit 403 of PC distribution subsystem 106;
FIG. 8 is a drawing showing the structure of Summarized Edition Restrictions #1 included within sequence group 50;
FIG. 9 is a block drawing showing the structure of PC 108;
FIG. 10 is a drawing of on-screen program list 70 displayed on display unit 475 of PC 108;
FIG. 11 is a block drawing showing the structure of mobile phone distribution subsystem 109;
FIG. 12 is a block diagram showing the structure of mobile phone 111.
FIG. 13 is a flowchart, continued in FIG. 14, showing the overall operations of program distribution system 10.
FIG. 14 is a flowchart, continued from FIG. 13, showing the overall operations of program distribution system 10.
FIG. 15 is a detailed flowchart of Step S101 (in the flowchart of FIG. 13) showing the operations involved in the program production process that takes place in program production subsystem 20;
FIG. 16 is a detailed flowchart of Step S107 (in the flowchart of FIG. 13), continued in FIG. 17, showing the operations involved in the production of sequence groups that takes place in PC distribution subsystem 106;
FIG. 17 is a detailed flowchart of Step S107 (in the flowchart of FIG. 13), continued from FIG. 16, showing the operations involved in the production of sequence groups that takes place in PC distribution subsystem 106;
FIG. 18 is a detailed flowchart of Step S115 (in the flowchart of FIG. 3) showing the operations involved in the program reproduction and display processes that take place in PC 108;
FIG. 19 is a detailed flowchart of Step S136 (in the flowchart of FIG. 14) showing the operations involved in the image reproduction process that takes place in mobile phone distribution subsystem 109;
FIG. 20 is a drawing showing the structures of broadcast program structure 2011, distribution program structure 2014, and distribution program structure 2015;
FIG. 21 is a drawing showing the structure of program distribution system 10a;
FIG. 22 is a drawing showing the structures of broadcast program structure 2021, distribution program structure 2023, and distribution program structure 2024;
FIG. 23 is a drawing showing the structures of broadcast program structure 2031, distribution program structure 2033, and distribution program structure 2034;
FIG. 24 is a drawing showing the structures of broadcast program structure 2041 and distribution program structure 2043; and
FIG. 25 is a drawing showing the structures of broadcast program structure 2051, distribution program 2054, and distribution program structure 2055.

### DESCRIPTION OF THE PREFERRED EMBODIMENT

The following describes a program distribution system 10 according to a preferred embodiment of the present invention with reference to the drawings.

Program distribution system 10 serves the function of a) producing a distribution program by using a program originally produced for the purpose of television broadcasting, and b) distributing the distribution program via the internet to PCs or mobile phones.

Here, the image data captured by a camera operator are referred to as raw image data, and small segments of image data separated out from the raw image data are referred to as image scenes. These small segments of image data (image scenes) are made up of a plurality of frame images.

A program for broadcasting is created when the broadcast program producer combines one or more image scenes.

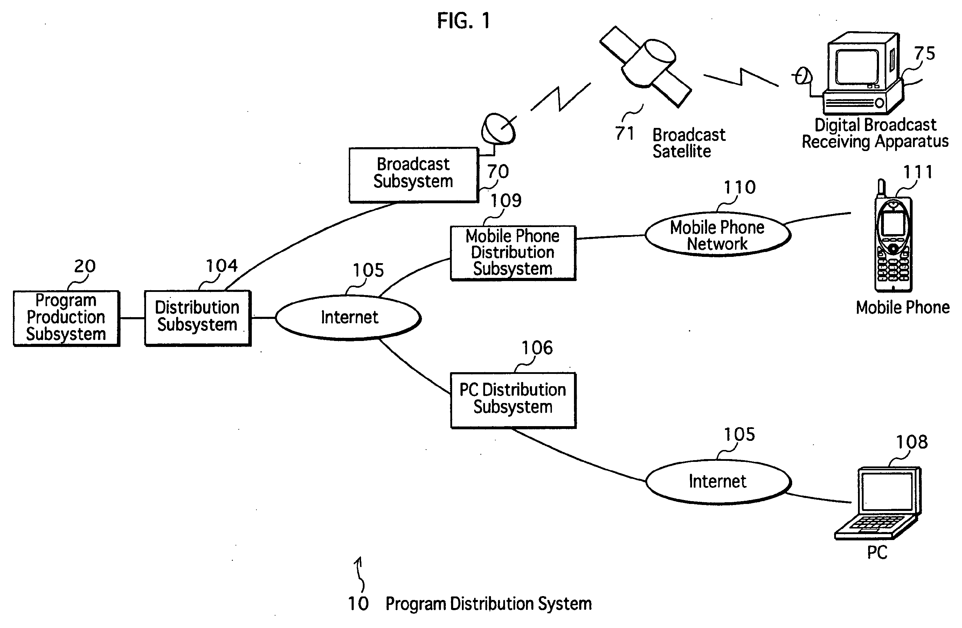

As indicated in FIG. 1, program distribution system 10 comprises program production subsystem 20, distribution subsystem 104, internet 105, PC distribution subsystem 106, PC 108, mobile phone distribution subsystem 109, mobile phone network 110, mobile phone 111, broadcasting subsystem 70, broadcast satellite 71 and digital broadcast reception apparatus 75.

Program production subsystem 20 is a system used by a person responsible for program production, and it has stored within it a) raw image data captured for the purpose of television broadcasting and b) structures for that broadcast program. Both of these are stored in the program production subsystem 20 beforehand. The broadcast program structure lays out the scene data for each image scene within a broadcast program, the scene data containing information regarding usage restrictions for each image scene. In accordance with the usage requests at the distribution destination of the produced distribution program and the usage restrictions laid out in the program structure, program subsystem 20 determines whether each image scene can be used. And, based on this determination, program production subsystem 20 produces the distribution program structures containing only the scene data of the image scenes approved for use. Then it transmits to program distribution subsystem 104 these produced distribution program structures as well as the raw image data. Details regarding the broadcast program structures and the distribution program structures will be discussed later.

Distribution subsystem 104 is a system used by a program producer. It receives the distribution program structures and raw image data from program production subsystem 20 and determines to which destinations this information should be transmitted. Next, via internet 105, distribution subsystem 104 transmits the distribution program structures and raw image data to the transmission destinations, these destinations being PC distribution subsystem 106 and mobile phone distribution subsystem 109.

PC distribution subsystem 106 is used by a distributor of programs intended for PCs. Via internet 105 PC distribution subsystem 106 receives the distribution program structure and raw image data from distribution subsystem 104 and uses this information to produce sequence groups. A sequence group lays out a plurality of playback patterns for each individual distribution program structure. The details regarding sequence groups will be discussed later. Via internet 105 PC distribution subsystem 106 receives commands regarding program and playback patterns from the user's PC 108, and, in accordance with those commands, it transmits the sequence groups and raw image data corresponding to the requested program back to PC 108 via internet 105.

Via internet 105, PC 108 receives the sequence groups and raw image data from PC distribution subsystem 106. Then, in accordance with the sequence groups, PC 108 retrieves from the raw image data segments of image data that correspond to the requested playback pattern. Finally, it reproduces the images and displays them.

Mobile phone distribution subsystem 109 is a system used by a distributor of programs intended for mobile phones. Via internet 105 it receives distribution program structures and raw image data from distribution subsystem 104 and internally stores this information. Then, mobile phone distribution subsystem 109 receives commands regarding programs from a user's mobile phone 111 via a mobile telephone network, and, in accordance with the distribution program structures stored within, it retrieves segments of image data that correspond to the user's commands and transmits those segments of image data to mobile phone 111 via mobile phone network 110.

Via mobile phone network 110, mobile phone 111 receives image data segments from mobile phone distribution subsystem 109. Then it reproduces the images and displays them.

Additionally, distribution subsystem 104 is connected to broadcast subsystem 70 via a specialized circuit. Broadcast subsystem 70 transmits broadcast waves via broadcast satellite 71, and digital broadcast reception apparatus 75 receives the broadcast waves.

Below are explanations of the various subsystems and apparatuses that make up program distribution system 10.

### 1.1. Structure of Program Production Subsystem 20

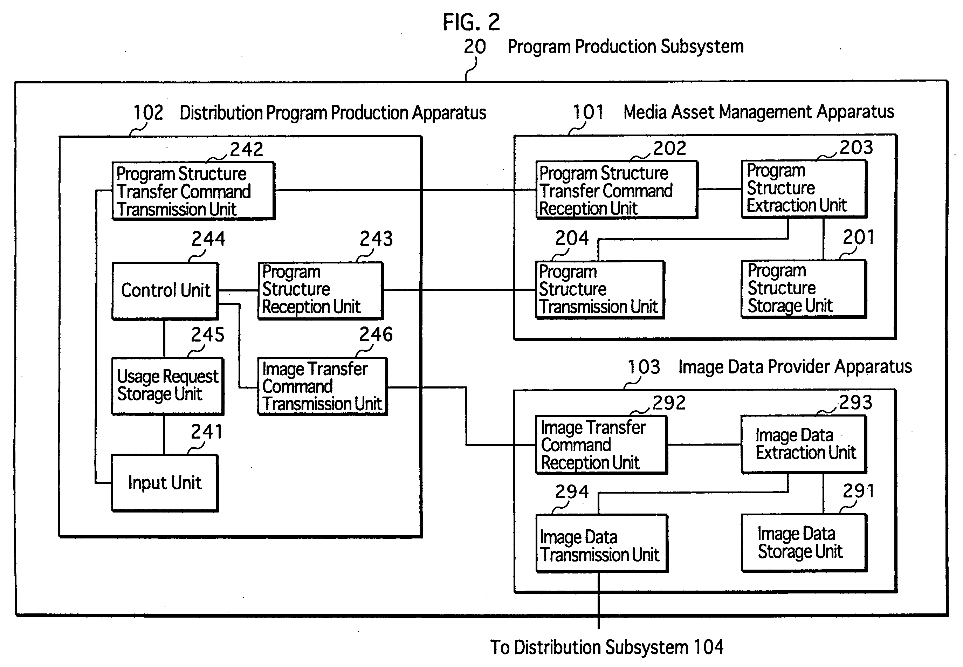

The block drawing in FIG. 2 will be used as a reference in the following explanation of the structure of program production subsystem 20.

Program production subsystem 20 is comprised of media asset management apparatus 101, distribution program production apparatus 102, image data provider apparatus 103, and a plurality of image data storage units. These are all interconnected via a LAN (Local Area Network) and they transmit information to one another. The plurality of image data storage units are not indicated in FIG. 2.

### 1.1.1. Structure of Media Asset Management Apparatus 101

As indicated in FIG. 2, media asset management apparatus 101 is comprised of program structure storage unit 201, program structure transfer command reception unit 202, program structure extraction unit 203, and program structure transmission unit 204.

Concretely speaking, media asset management apparatus 101 is a computer system comprising a microprocessor, a ROM, a RAM, a hard disk unit, a display unit, a key board, a mouse, and a LAN interconnection unit. Computer programs are stored within the RAM and/or the hard disk unit. Media asset management apparatus 101 functions based on the operations of the microprocessor that operates in accordance with the computer programs.

### (1) Program Structure Storage Unit 201

Concretely speaking, program structure storage unit 201 is a hard disk unit in which one or more broadcast program structures are stored.

Broadcast program structures lay out a) program identifiers for identifying a broadcast program produced for television broadcasting, and b) the scene data that corresponds to the image scenes that make up the broadcast program. For every complete broadcast program there is one corresponding broadcast program structure.

Each unit of scene data comprises: a reproduction sequence, a site name, a file name, an inpoint, a duration, usage restrictions, retrieval specifications for main program, retrieval specifications for a director's edition (director's cut, hereinafter DC), retrieval specifications for an edition with commercials (commercial edition, hereinafter CM), and retrieval specifications for a summarized Edition.

When a distribution program is produced, various image scenes from the broadcast program are assembled into 4 different types of playback patterns: the main program, a DC edition, a CM edition, and a summarized Edition. In this case, "main program" refers to that which has been edited to serve as the principal segment of the program, and, of the 4 types listed above, this is the principal playback pattern. The DC edition is a program that has been specially re-edited by the broadcast program producer and it usually includes image scenes that are not found in the main program. The CM edition is a version of the program wherein commercials are inserted into the main program, and the "summarized" edition is a version of the program that includes only a certain portion of the main program. For every unit of scene data, there is one corresponding image scene.

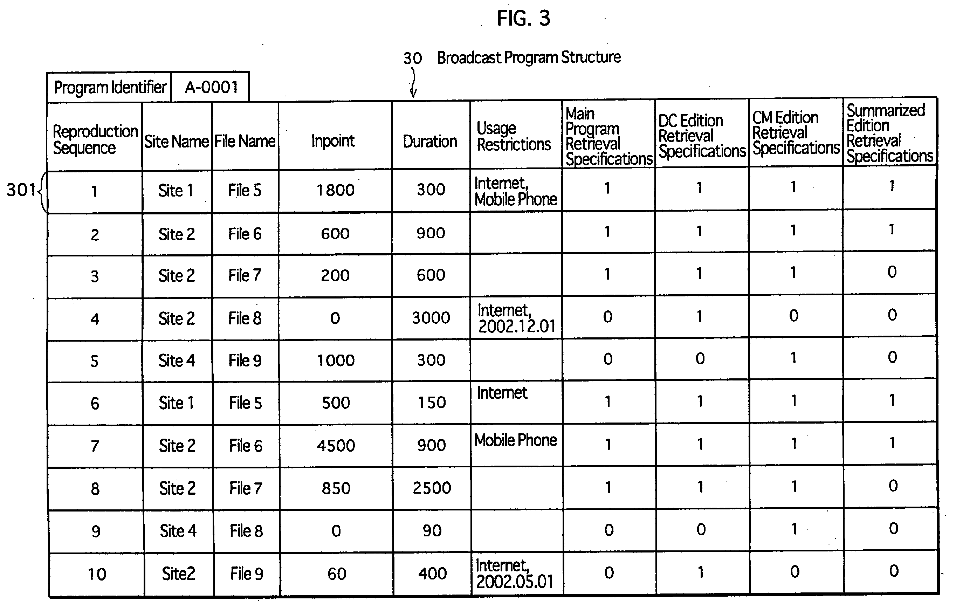

Broadcast program structure 30 shown in FIG. 3 is one example of a broadcast program structure. It comprises a program identifier (A-0001, in this case) and 10 separate units of scene data.

The following will be a detailed explanation of scene data using scene data 301 in FIG. 3 as an example.

The reproduction sequence number designates when, in the overall sequence of scene data within the broadcast program, the image scene corresponding to the scene data 301 is to be reproduced. Since scene data 301 is designated with a "1", the image scene corresponding to scene data 301 would be the first to be reproduced out of all the scene data units within the program.

The site name is an identifier that identifies which image data storage unit of the plurality of image data storage units contains the raw image data that includes the segments if image data corresponding to the image scene. In this example, the sight name designated for scene data 301 is "Site 2", meaning that the segment of image data corresponding to the image scene is stored in an image data storage unit that is identified by the title "Site 2".

The file name is an identifier that identifies the raw image data that includes the segment of image data corresponding to the image scene. In this example, the file name designated for scene data 301 is "File 5", meaning that the segment of image data that corresponds to the image scene is included within the raw image data that is identified by the title "File 5".

The inpoint designates the one frame, out of the plurality frames included in the image data, from which the retrieving is to begin, and the duration indicates the number of frames to be retrieved. In this example, the inpoint of scene data 301 is "1800" and the duration is "300". Therefore, the image scene in question corresponds to the segment of image data made up of 300 frames within the raw image data beginning with Frame No. 1800.

The usage restriction information indicates the distribution routes in which usage of the image scene is prohibited. If there is nothing indicated in the usage restriction information, this indicates that the image scene in question may be distributed via any form of distribution route. Since the usage restrictions for scene data 301 are indicated as "internet, mobile phone", the distribution of the corresponding image scene to the internet or to mobile phones is not permitted.

For the main program retrieval specifications, either a "0" or a "1" is indicated. A "0" indicates that the image scene in question is not to be included within the main program edition of the distribution program, and a "1" indicates that it is. In this example, "1" is given as the main program retrieval specification for scene data 301, indicating that the image scene is to be included within the main program edition of the distribution program. The same applies for the DC edition retrieval specifications, the CM edition retrieval specifications, and the Summarized Edition retrieval specifications, therefore further explanation will not be provided.

### (2) Structure of Program Structure Transfer Command Reception Unit 202

Concretely speaking, program structure transfer command reception unit 202 comprises a microprocessor, a RAM, and a LAN connector unit. Via program structure transfer command transmission unit 242 of distribution program production apparatus 102, it transmits and receives information between input unit 241 of distribution program production apparatus 102 and program structure extraction unit 203 of media asset management apparatus 101. The "information" mentioned above is made up of program structure transfer commands. A program structure transfer command includes 1 program identifier, and it also includes a command for the extraction from program structure storage unit 201 of the same program identifier and the broadcast program structure that includes that identifier.

### (3) Structure of Program Structure Extraction Unit 203

Concretely speaking, program structure extraction unit 203 comprises a microprocessor and a RAM. It receives the program structure transfer command from input unit 241 via program transfer command reception unit 202 and program transfer command transmission unit 242 of distribution program production apparatus 102.

Program structure extraction unit 203 assesses the program identifier included in the received program structure transfer command. Then it extracts from program structure storage unit 201. that program identifier and the program structure that contains that identifier. Next, it transmits the extracted broadcast program structure to control unit 244 via program structure transmission unit 204 and program structure reception unit 243 of distribution program production apparatus 102.

### (4) Program Structure Transmission Unit 204

Concretely speaking, program structure transmission unit 204 comprises a microprocessor, a RAM, and a LAN connecting unit. Via program structure reception unit 243 of distribution program production apparatus 102, it transmits and receives information between program structure extraction unit 203 and control unit 244. Here "information" refers to the broadcast program structure extracted from program structure storage unit 201 by program structure extraction unit 203.

### 1.1.2. Structure of Distribution Program Production Apparatus 102

As indicated in FIG. 2, distribution program production apparatus 102 comprises input unit 241, program structure transfer command transmission unit 242, program structure reception unit 243, control unit 244, usage request storage unit 245, and image transfer command transmission unit 246.

Concretely speaking, distribution program production apparatus 102 is a computer system, and its functioning is dependent on a microprocessor that operates in accordance with a computer program.

As will be described in detail below, based on the usage requests received from the program producer that indicate the desired distribution service route of the distribution program and the usage restrictions that are included within the broadcast program structure received from media asset management unit 101, distribution program production apparatus 102 determines whether each image scene is appropriate for use. And in accordance with these determinations, it produces distribution program structures.

### (1) Input Unit 241

Concretely speaking, input unit 241 comprises a keyboard or a mouse or similar technology. It receives from the program producer the program identifier of the program desired to be produced as a distribution program. Then it produces a program structure transmission command that includes that received program identifier. Next, it outputs this program structure transmission command to program structure extraction unit 203 via program structure transfer command transmission unit 242 and program structure transfer command reception unit 202.

In addition to this, input unit 241 receives inputs of usage requests from a producer of the distribution program regarding the distribution service route(s) desired for the distribution program being produced, and it outputs these usage requests to usage request storage unit 245. These usage requests indicate whether the producer desires that the distribution program be, for example, distributed via the internet or to a mobile phone.

### (2) Structure of Program Structure Transfer Command Transmission Unit 242

Concretely speaking, program structure transfer command transmission unit 242 comprises a microprocessor, a RAM, and a LAN connecting unit. Via program structure transfer command reception unit 202, it transmits and receives information between input unit 241 and program structure extraction unit 203. In this case "information" refers to program structure transfer commands.

### (3) Structure of Program Structure Reception Unit 243

Concretely speaking, program structure reception unit 243 comprises a microprocessor, a RAM, and a LAN connecting unit. Via program structure transmission unit 204, it transmits and receives information between program structure extraction unit 203 and control unit 244. In this case "information" refers to broadcast program structures.

### (4) Structure of Control Unit 244

Concretely speaking, control unit 244 comprises a microprocessor and a RAM. Stored within the RAM is a computer program for the required control functions, and control unit 244 functions based on the microprocessor running the program.

Via program structure transmission unit 204 and program structure reception unit 243, control unit 244 receives broadcast program structures from program structure extraction unit 203. Additionally, it retrieves the usage requests from usage request storage unit 245 and, in accordance with whether or not these requests are restricted by the usage restriction information, it determines which of the plurality of image scenes included in the broadcast program structures may be used. And based on these determinations, it produces the distribution program structures. Below is a detailed explanation of this process.

### (Detailed Explanation of A) Determining Appropriateness for Usage and B) Production of Distribution Program Structures)

In accordance with the program identifier included within the broadcast program structure, control unit 244 produces a new program identifier. To give a concrete example, based on program identifier "A-0001" in the broadcast program structure, control unit 244 produces the new program identifier "B-0001", using this as the program identifier for the distribution program structure. In this case, "A" indicates a broadcast program and "B" indicates a distribution program, and "0001" is a number in a series of consecutive numbers indicating the particular program in question.

Next, in accordance with the reproduction sequence, control unit 244 retrieves scene data from the broadcast program structure. Then it assesses whether there are usage requests that are restricted by the usage restrictions within the scene data. When usage requests are restricted by the usage restriction(s) of a particular unit of scene data, that scene data is discarded. When the usage requests are not restricted by the usage restriction(s) of a particular unit of scene data, control unit 244 constructs new image scene based on that scene data using the site name, file name, inpoint, duration, usage restrictions, retrieval specifications for main program, retrieval specifications for a DC edition, retrieval specifications for a CM edition, and retrieval specifications for a Summarized Edition from the original scene data. Finally, it adds this new scene data to the new program identifier created earlier.

Control unit 244 repeats this same process for each unit of scene data included within the broadcast program structure, and it creates a new reproduction sequence with the newly formed scene data starting with 1 and continuing with 2, 3,etc. In the manner described in the above paragraph, control unit 244 creates distribution program structures by creating these new program identifiers and new units of scene data.

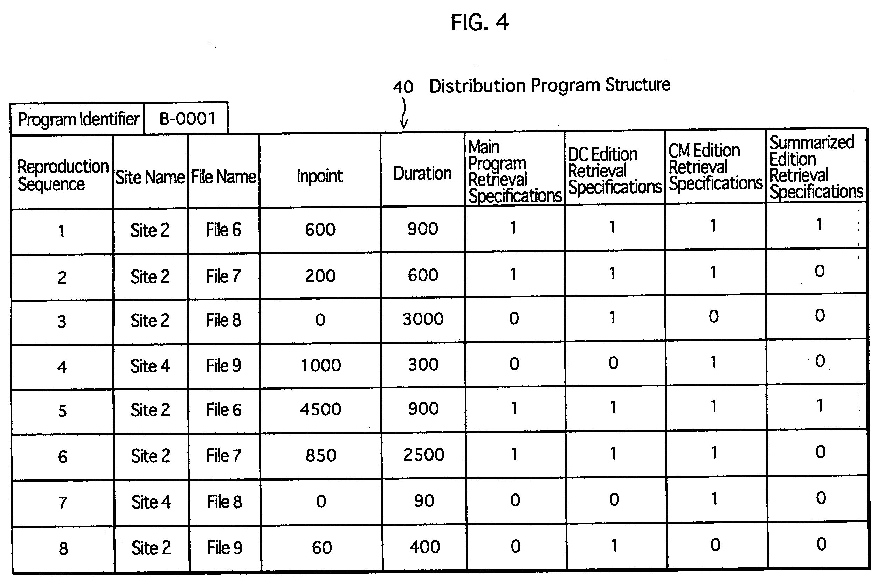

Distribution program structure 40 in FIG. 4 is one example of such a distribution program structure. This is a program structure that resulted from inputting "internet" as a usage request for broadcast program structure 30 in FIG. 3.

Finally, via image transfer command transmission unit 246 and image transfer command reception unit 292, control unit 244 transmits the produced distribution program structure to image date extraction unit 293.

### (5) Usage Request Storage Unit 245

Concretely speaking, usage request storage unit 245 is a semi-conductor memory that stores the usage requests received by input unit 241.

### (6) Image Transfer command Transmission Unit 246

Concretely speaking, image transfer command transmission unit 246 comprises a microprocessor, a RAM, and a LAN connecting unit. Via image transfer command reception unit 292, it transmits and receives information between control unit 244 and image data extraction unit 293. In this case, "information" refers to distribution program structures.

### 1.1.3. Structure of Image Data Provider Apparatus 103

As indicated in FIG. 2, image data provider apparatus 103 comprises image data storage unit 291, image transfer command reception unit 292, image data extraction unit 293, and image data transmission unit 294.

Concretely speaking, image data provider apparatus 103 is a computer system that functions as a result of a microprocessor operating in accordance with a computer program.

Stored within image data provider apparatus 103 is a plurality of units of data stored in advance. And in accordance with the distribution program structures received from distribution program production apparatus 102, it retrieves raw image data and transmits that data to distribution subsystem 104 in the manner described below.

### (1) Image Data Storage Unit 291

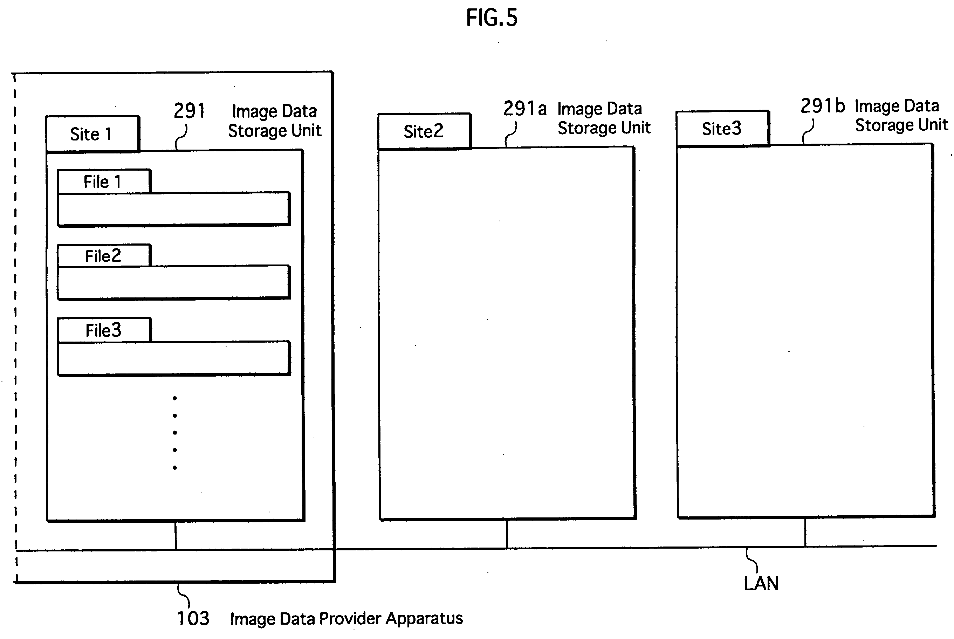

Concretely speaking, image data storage unit 291 comprises a hard disc unit in which a plurality of units of raw image data is stored in advance. As indicated in FIG. 5, each unit of raw image data has a file name that allows that particular unit of raw image data to be identified and distinguished from the plurality of units of raw image data.

In addition to image data storage unit 291, program distribution subsystem 20 includes image data storage unit 291a, 291b, etc. While image data storage unit 291 is located within image data provider apparatus 103, the other image data storage units (291a, 291b, etc.) are located outside of image data provider apparatus 103. All of these image data storage units (291, 291a, 291b, etc.) are connected to image data extraction unit 293 via a LAN.

### (2) Image Transfer command Reception Unit 292

Concretely speaking, image transfer command reception unit 292 comprises a microprocessor, a RAM, and a LAN connecting unit. Via image transfer command transmission unit 246, it transmits and receives information between control unit244 and image data extraction unit 292. In this case, "information" refers to distribution program structures.

### (3) Image Data Extraction Unit 293

Concretely speaking, image data extraction unit comprises a microprocessor and a RAM. Via image transfer command reception unit 292, it receives distribution program structures. Then, in sequence, image data extraction unit 293 retrieves a plurality of units of scene data included within the received distribution program structures. Next, from the image data storage unit with the same site name as the site name in the retrieved scene data, image data extraction unit 293 retrieves raw image data that has the same file name as the file name in the retrieved scene data. Finally, via image data transmission unit 294, image data extraction unit 293 transmits the retrieved raw image data along with the distribution program structures to distribution subsystem 104.

### (4) Image Data Transmission Unit 294

Concretely speaking, image data transmission unit 294 comprises a microprocessor, a RAM, and a LAN connecting unit. It transmits and receives information between image data extraction unit 293 and distribution subsystem 104. In this case, "information" refers to raw image data and distribution program structures.

### 1.2. Structure of Distribution Subsystem 104

Concretely speaking, distribution subsystem 104 is a computer system comprising a microprocessor, a ROM, a RAM, a hard disc unit, a display unit, a keyboard, and a mouse. A computer program is stored within the RAM or hard disc unit. Distribution subsystem 104 functions as a result of the microprocessor operating in accordance with the computer program. Note that there is no drawing provided to illustrate distribution subsystem 104.

Distribution subsystem 104 receives the raw image data and distribution program structures transmitted by image data transmission unit 294 of image data provider apparatus 103. Then, after it determines the transmission destinations of these units of raw image data and distribution program structures, distribution subsystem 104 transmits this information to those destinations.

Concretely speaking, the transmission destinations are PC distribution subsystem and mobile phone distribution subsystem 109.

### 1.3. Structure of PC Distribution Subsystem 106

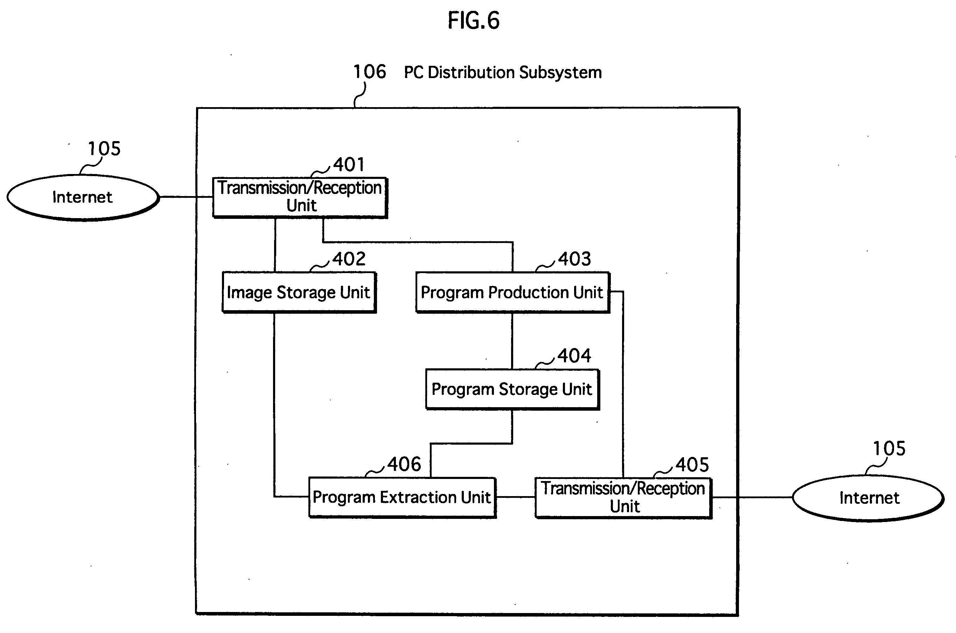

Here, PC distribution subsystem 106 will be explained with reference to FIG. 6.

As indicated in FIG. 6, PC distribution subsystem 106 comprises transmission/reception unit 401, image storage unit 402, program production unit 403, program storage unit 404, transmission/reception unit 405, and program extraction unit 406.

Concretely speaking, PC distribution subsystem 106 is a computer system that functions as a result of a microprocessor operating in accordance with a computer program.

Via distribution subsystem 104 and internet 105, PC distribution subsystem 106 receives the distribution program structures and raw image data transmitted from image data provider apparatus 103 of program production system 20. And in accordance with this received information, it produces a sequence group. Furthermore, PC distribution subsystem 106 receives commands from the user's PC 108, and, in accordance with those commands, it transmits corresponding sequence groups and raw image data to PC 108. PC distribution subsystem 106 will later be described in detail.

### (1) Transmission/reception unit 401

Concretely speaking, transmission/reception unit 401 comprises a microprocessor and a RAM. A computer program for transmitting and receiving is stored within the RAM. When the microprocessor runs the computer program, transmission/reception unit 401, via internet 105 and distribution subsystem 104, transmits and receives information between image data provider apparatus 103 of program production subsystem 20 and image storage unit 402 and program production unit 403. The nature of the "information" transmitted in this case is explained in detail below.

Transmission/reception unit 401 receives distribution program structures and raw image data from image data provider apparatus 103. Then, it outputs the received distribution program structures to program production unit 403 and it writes the raw image data onto image storage unit 402.

### (2) Image Storage Unit 402

Concretely speaking, image storage unit 402 is a semiconductor memory that stores raw image data received from transmission/reception unit 401.

### (3) Program Production Unit 403

Concretely speaking, program production unit 403 comprises a microprocessor and a RAM.

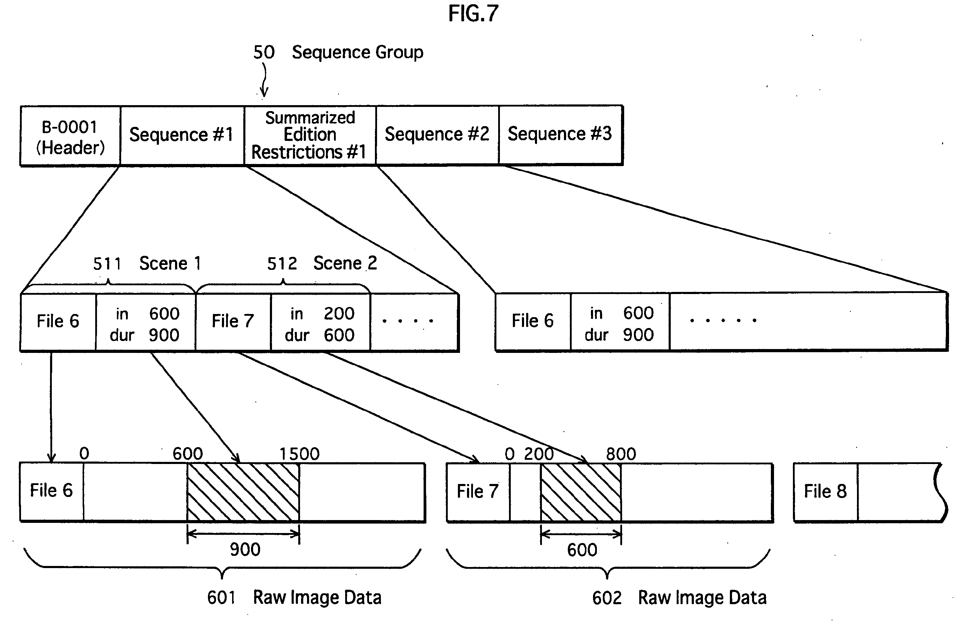

Program production unit 403 receives distribution program structures from transmission/reception unit 401. Then, in sequence, it retrieves scene data from the received distribution program structures. Next, in accordance with the scene data, program production unit 403 produces, in this order, the header, Sequence #1, Summarized Edition Restrictions #1, Sequence #2, and Sequence #3. Next, as indicated in FIG. 7, it produces a sequence group that comprises the header, Sequence #1, Summarized Edition Restrictions #1, Sequence #2, and Sequence #3. Finally, program production unit 403 writes this produced sequence group onto program storage unit 404.

The following is an explanation of the production of the header, Sequence #1, Summarized Edition Restrictions #1, Sequence #2, and Sequence #3.

First of all, program production unit 403 produces a header that includes the identifier that identifies the retrieved distribution program structure.

Next, program production unit 403 retrieves scene data from the distribution program structure and, it detects whether a "0" or a "1" is indicated in the scene data for the main program retrieval specifications. If a "0" is indicated, the scene data is discarded. If a "1" is indicated, the file name, inpoint, and duration are extracted and stored as "Scene 1".

The above process is repeated for every unit of scene data included within the distribution program structure, and Sequence #1 is produced by combining the resulting image scenes #1, #2, #3, etc.

When a "1" is indicated for the main program retrieval specifications of a particular unit of scene data, program production unit 403 also extracts the Summarized Edition retrieval specifications included within that same scene data. Then it stores the "1" or "0" in correspondence with the appropriate image scene number.

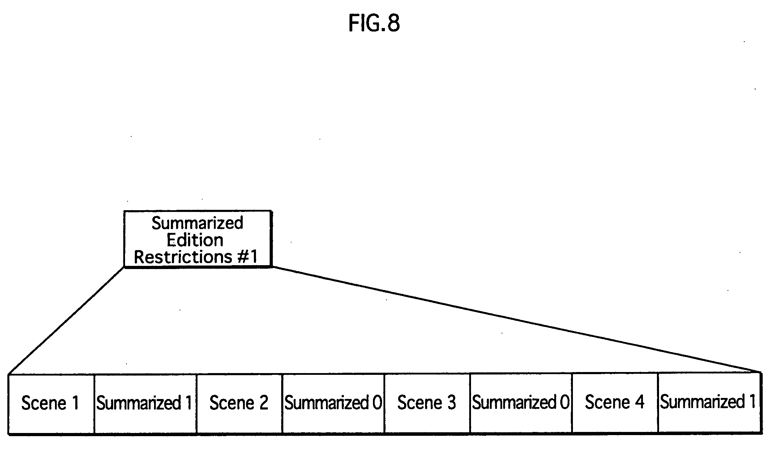

Program production unit 403 repeats this process for every image scene that has a "1" indicated for its main program retrieval specifications, and then it produces Summarized Edition Restrictions #1, shown in FIG. 8, by creating a plurality of combined groups made up of scene numbers and their corresponding Summarized Edition retrieval specifications of "1" or "0".

Next, after once again retrieving all of the scene data included within the distribution program structure, program production unit 403 produces Sequence #2 by conducting the same process used in the production of Sequence #1. This time, however, the process is conducted using the DC edition retrieval specifications indicated in the scene data.

Next, after once again retrieving all of the scene data included within the distribution program structure, program production unit 403 produces Sequence #3 by conducting the same process used in the production of both Sequence #1 and Sequence #2. This time, however, the process is conducted using the CM edition retrieval specifications indicated in the scene data.

Sequence group 50 is provided in FIG. 7 as one example of a sequence group produced by program production unit 403.

Additionally, for every distribution program structure it receives, program production unit 403 retrieves the control data it has stored in advance for an on-screen program list. Program production unit 403 writes onto the control information for the on-screen program list the program name of the program that corresponds to the distribution program structure being processed at the time. After this new information is written onto the control information for the on-screen program list, this control information is once again stored within program production unit 403. While it performs this storing function, it transmits the control information to PC 108 via transmission/reception unit 405 and internet 105. This control information for the on-screen program list is in an HTML language format and therefore can be used in producing on-screen program lists to be displayed on the screen of PC 108. On-screen program lists will be discussed in detail later.

### (4) Program Storage Unit 404

Concretely speaking, program storage unit 404 is a semiconductor memory provided with a designated space for storing sequence groups written onto this memory space by program production unit 403.

### (5) Transmission/reception unit 405

Concretely speaking, transmission/reception unit 405 comprises a microprocessor and a RAM. Via internet 105, it transmits and receives information, such as that described below, between the user's PC 108 and program extraction unit 406.

Transmission/reception unit 405 transmits to PC 103 the on-screen program list it receives from program production unit 404, as well as the sequence groups and raw image data it receives from program extraction unit 406.

Additionally, transmission/reception unit 405 receives from PC 108 requests for programs in accordance with what appears on the on-screen program list. Then it outputs these requests to program extraction unit 406.

### (6) Program Extraction Unit 406

Concretely speaking, program extraction unit 406 comprises a microprocessor and a RAM.

Via internet 105 and transmission/reception unit 405, program extraction unit 406 receives data from PC 108 that includes program identifiers for identifying a requested program. Then it extracts from program storage unit 404 the distribution program structure that includes the same identifier as that which it received.

Furthermore, program extraction unit 406 extracts from image storage unit 402 the raw image data that matches the "file name" indicated in the extracted distribution program structure. Then, via transmission/reception unit 405 and internet 105, extraction unit 406 transmits the extracted distribution program structure and raw image data to PC 108.

### 1.4. Structure of PC 108

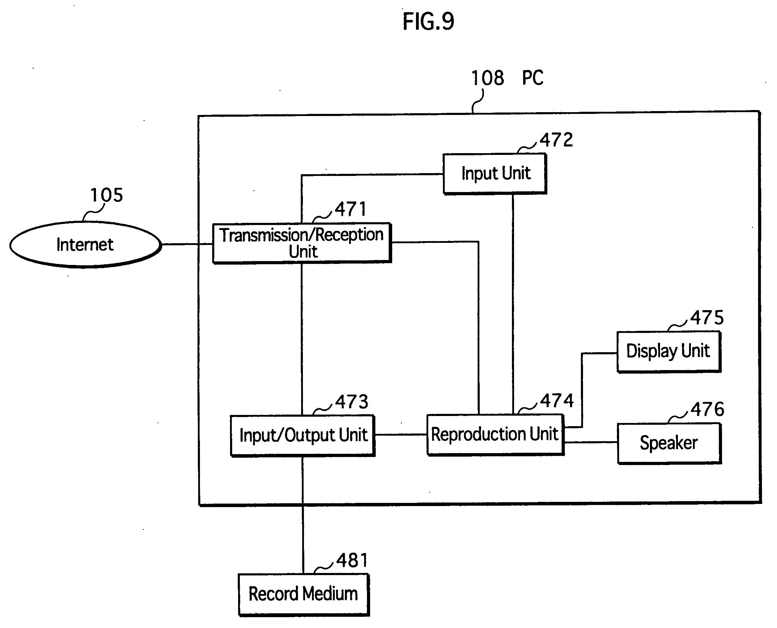

Here, the structure of PC 108 will be explained with reference to FIG. 9.

As indicated in FIG. 9, PC 108 comprises transmission/reception unit 471, input unit 472, input/output unit 473, reproduction unit 474, display unit 475, and speaker 476, and record medium 481 is connected to PC 108 via input/output unit 473.

Concretely speaking, PC 108 is a computer system comprising a microprocessor, a ROM, a RAM, a hard disc unit, a display unit, a keyboard, a mouse, and a speaker. A computer program is stored within the RAM or hard disc unit. PC 108 functions as a result of the microprocessor operating in accordance with the computer program.

### (1) Transmission/reception unit 471

Concretely speaking, transmission/reception unit 471 comprises a microprocessor and a RAM. Within the RAM is stored a transmission/reception computer program. And in accordance with the microprocessor running this transmission/reception computer program, transmission/reception unit 471 transmits and receives information to and from PC distribution subsystem 106 via internet 105.

Transmission/reception unit 471 outputs to input/output unit 473 and reproduction unit 474 the information it receives from PC distribution subsystem 106. Furthermore, transmission/reception unit 471 receives information from input unit 472 and, via internet 105 and transmission/reception unit 405, it transmits this information to program extraction unit 406.

### (2) Input Unit 472

Concretely speaking, input unit 472 comprises a keyboard and a mouse. It outputs commands produced as a result of the user's operating of the keyboard and mouse to display unit 475 via reproduction unit 474.

Input unit 472 receives program identifiers and program edition requests as inputs from the user that indicate the user's preferences. Then input unit 472 transmits the inputted program identifiers to PC distribution subsystem 106 via transmission/reception unit 471, and, furthermore, it outputs these identifiers as well as the edition requests to reproduction unit 474.

### (3) Input/Output Unit 473

Concretely speaking, input/output unit 473 is a DVD-RAM drive unit. Via transmission/reception unit 471, it receives information from PC distribution subsystem 106 and writes that information onto record medium 481. In this case, the record medium would be a DVD-RAM disc.

The information received from PC distribution subsystem 106 by input/output unit 473 is made up of sequence groups and raw image data. Input/output unit 473 writes this received information onto record medium 481. Then, in accordance with commands received from reproduction unit 474, input/output unit 473 retrieves the stored information from record medium 481 and outputs the information to reproduction unit 474.

### (4) Reproduction Unit 474

Concretely speaking, reproduction unit 474 comprises a microprocessor and a RAM. A reproduction computer program is stored within the RAM, and reproduction unit 474 functions in the manner described below based on the microprocessor running the reproduction computer program.

Reproduction unit 474 receives from input unit 472 the program identifiers and edition requests of the program requested by the user. Then, via input/output unit 473, it retrieves from record medium 481 the sequence groups whose program identifiers match the ones received.

Next, reproduction unit 474 determines whether the edition requests indicate "main program", "DC edition", "CM edition", or "Summarized Edition". Then, in accordance with the indicated edition request, reproduction unit 474 retrieves the corresponding segment of data from record medium 481 via input/output unit 473.

The following is an explanation of the retrieval of the segments of data in accordance with the edition request.

If the edition request indicates that the user is requesting a "main program", reproduction unit 474 reads Sequence #1 of the sequence group that was retrieved earlier. Then, from the raw image data identified by the file name within "Scene 1" of Sequence #1, reproduction unit 474 retrieves the segment of image data designated by "in" (inpoint) and "dur" (duration) designators. Reproduction unit 474 retrieves this segment of image data from record medium 481 via input/output unit 473. Reproduction unit 474 repeats the same process for "Scene 2", "Scene 3", and so on, retrieving from record medium 481, and via input/output unit 473, the corresponding segments of image data for each scene.

If the edition request indicates the "DC edition", reproduction unit 474 reads Sequence #2 from the same sequence group and conducts the same process as explained above.

If the edition request indicates the "CM edition", reproduction unit 474 reads Sequence #3 from the same Sequence group and conducts the same process as explained above.

If the edition request indicates the "Summarized Edition", reproduction unit 474 reads Summarized Edition Restrictions #1 from the sequence group and determines whether "Scene 1" has a Summarized Edition retrieval specification of "1" or "0". Only when the retrieval specification is indicated as a "1", reproduction unit proceeds to read Sequence #1, from the raw image data identified by the file name within "Scene 1", it retrieves the segment of image data indicated by the "in" and "dur" indicators. Reproduction unit 474 retrieves this segment of image data via input/output unit 473 from the raw image data stored on record medium 481. Next, reproduction unit 474 repeats the same process for "Scene 2", "Scene 3", and so on, and, only when "1" is given as the retrieval specification, retrieves the indicated segments of image data in the same manner as above.

Reproduction unit 474 produces decoded image data by decoding the segments of image data retrieved in the manner above from record medium 481 via input/output unit 473. Then it outputs this decoded image data to display unit 475.

Furthermore, via transmission/reception unit 471 and internet 105, reproduction unit 474 receives control information for an on-screen program list from PC distribution subsystem 106. Based on this control information, reproduction unit 474 produces an on-screen program list and outputs it to display unit 475. The on-screen program list will be explained in detail later.

### (5) Display Unit 475

Concretely speaking, display unit 475 is a display apparatus.

Display unit 475 receives the on-screen program list from reproduction unit 474 and displays this list. Furthermore, display unit 475 displays the operational commands received by input unit 472.

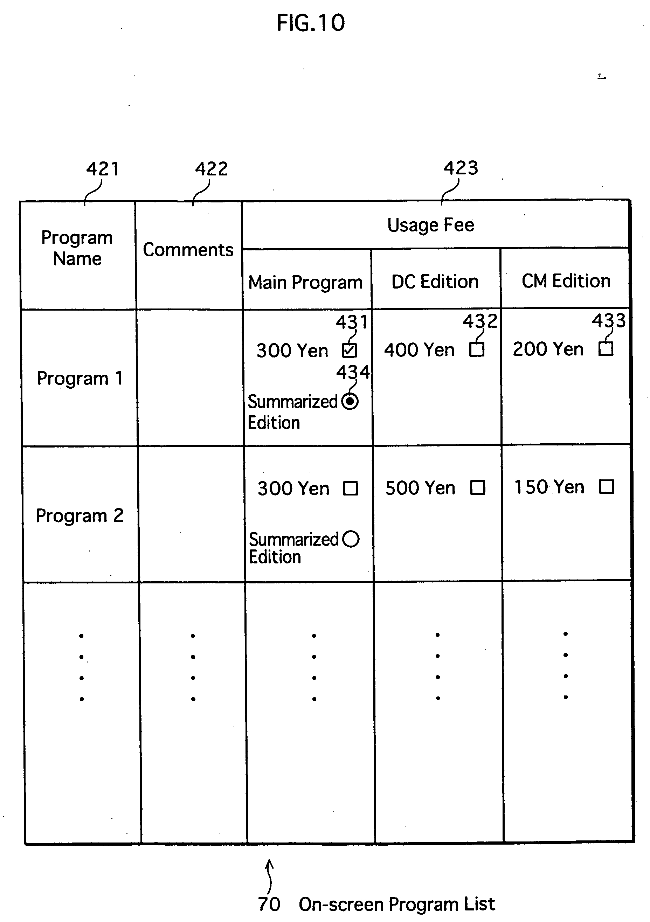

The on-screen program list is an on-screen display used by the user for the selection of a preferred program and the selection of the preferred editions of that program. As indicated in on-screen program list 70 of FIG. 10, this includes program name column 421, comments column 422, usage fee column 423, check box 431, 432 and 433, and radio button 434.

The program names are displayed in program name column 421, and messages regarding the usage of the program are displayed in comments column 422.

Usage fee column 423 is broken down into columns titled "Main Program", "DC Edition" and "CM edition", and for each of these retrieval specifications, a usage fee is displayed. Check box 431 is for the purpose of selecting "Main Program", check box 432 for "DC Edition", and check box 433 for "CM Edition". When display unit 475 receives an indication from input unit 472 that check box 431 has been selected, it indicates this selection by displaying a check within check box 431. It functions in the same way for the other check boxes. Note that when one of check boxes 431, 432 and 433 is selected, the remaining check boxes are blocked off from selection.

Radio button 434 is used for the purpose of selecting the "Summarized Edition". When display unit 475 receives and indication from input unit 472 that radio button 434 has been selected, it indicates this selection by displaying a mark within radio button 434. Note that the selection of radio button 434 is possible only when check box 431 has been selected. When check box 432 or 433 has been selected, radio button 434 is blocked off from selection.

Finally display unit 475 receives the decoded segment of image data produced by reproduction unit 474, and upon each reception, it displays that received decoded image data.

### 1.5. Structure of Mobile Phone Distribution Subsystem 109

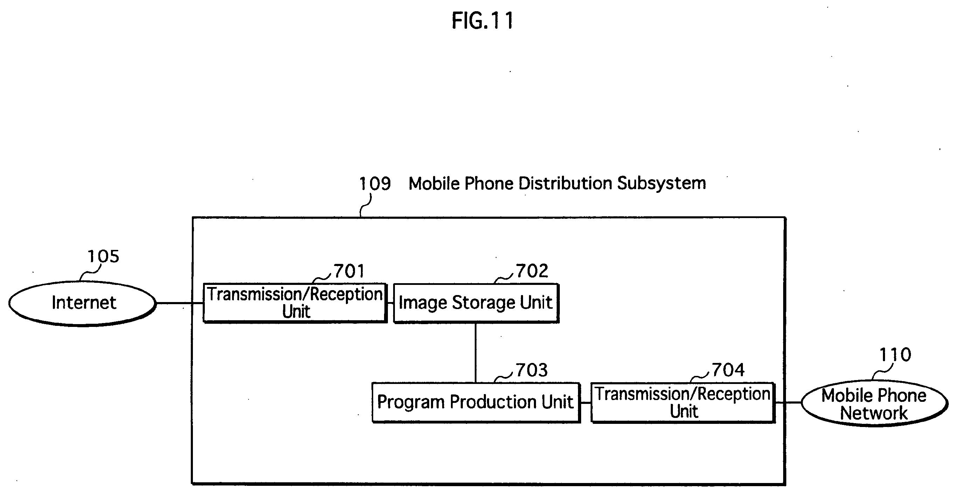

Here, FIG. 11 will be used in explaining the structure of mobile phone distribution subsystem 109.

As indicated in FIG. 11, mobile phone distribution subsystem 109 comprises transmission/reception unit 701, image storage unit 702, program production unit 703, and transmission/reception unit 704.

Concretely speaking, mobile phone distribution subsystem 109 is a computer system that functions as a result of a microprocessor running a computer program.

Via distribution subsystem 104 and internet 105, mobile phone distribution subsystem 109 receives distribution program structures and raw image data transmitted from image data provider apparatus 103 of program production subsystem 20. Also, mobile phone distribution subsystem 109 receives commands from the user's mobile phone 111. Then it produces from the received distribution program structures and raw image data the program indicated by the received command. Then it transmits the produced program to mobile phone 111. The details are explained below.

### (1) Transmission/Reception Unit 701

Concretely speaking, transmission/reception unit 701 comprises a microprocessor and a RAM, with a transmission/reception computer program stored within the RAM. Transmission/reception unit 701 functions as a result of the microprocessor operating in accordance with the transmission/reception computer program.

Via internet 105 and distribution subsystem 104, transmission/reception unit 701 receives distribution program structures and raw image data transmitted from image data provider apparatus 103 of program production subsystem 20. Each time it receives these distribution program structures and raw image data, transmission/reception unit 701 outputs the distribution program structures to program production unit 703 and writes the raw image data onto image storage unit 702.

### (2) Image Storage Unit 702

Concretely speaking, image storage unit 702 is a semiconductor memory provided with an area designated for the storage of raw image data, storing the raw image data written onto its storage space by transmission/reception unit 701.

### (3) Program Production Unit 703

Concretely speaking, program production unit 703 comprises a microprocessor and a RAM, with the RAM storing various types of computer programs. Program production unit 703 functions as a result of the microprocessor operating in accordance with the computer programs.

Program production unit 703 receives distribution program structures from transmission/reception unit 701. Each time it receives these structures, program production unit 703 retrieves on-screen program list control information stored within itself in advance. Then it proceeds to write onto this control information the program names, etc., that correspond to the structures. After adding the program names, etc., to the on-screen program list control information, program production unit 703 stores the updated information once again. At the same time, it transmits this updated information to mobile phone 111 via transmission/reception unit 704 and mobile phone network 110.

Additionally, via mobile phone network 110 and transmission/reception unit 404, program production unit 703 receives from mobile phone 111 information that designates a program and an edition request. Then, from one or more of the distribution program structures stored within, program production unit 703 retrieves structures that include program identifiers that match the program identifiers in the received information.

Next, for every unit of scene data included within the retrieved distribution program structures, program production unit 703 determines whether the retrieval specifications, of the units of scene data that match usage requests included within the information received from mobile phone 111, are indicated as "1" or "0". If the retrieval specification is "1", program production unit 703, in accordance with the file name, inpoint and duration laid out by the scene data, retrieves a segment of image data from raw image data stored in image storage unit 702. For instance, if the file name is File 6, the retrieval commencement number is 600, and the duration is 900, program production unit 703 will retrieve a segment of image data, frames No. 600 through 900, out of the raw image data designated as belonging to File 6, this raw image data included in the plurality of units of raw image data stored within image storage unit 702.

Program production unit 703 outputs this retrieved segment of image data to transmission/reception unit 704.

### (4) Transmission/reception unit 704

Concretely speaking, transmission/reception unit 704 comprises a microprocessor and a RAM. Via mobile phone network 110, it transmits and receives information such as that indicated below between program production unit 703 and mobile phone 111.

Transmission/reception unit 704 receives on-screen program list control information from program production unit 703 and transmits that information to mobile phone 111. Additionally, transmission/reception unit 704 receives from mobile phone 111 information indicating program and edition requests regarding that program, then it outputs that information to program production unit 703.

Furthermore, transmission/reception unit 704 receives segments of image data from program production unit 703 and transmits that image data, frame by frame, to mobile phone 111. 1.6. Structure of Mobile Phone 111

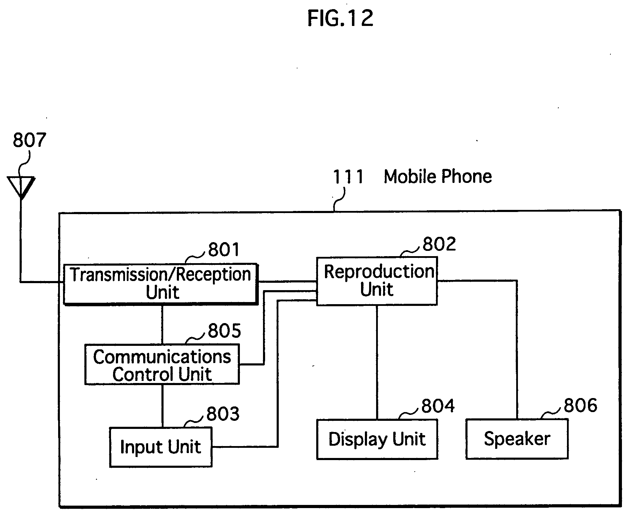

Here, the structure of mobile phone 111 will be explained using FIG. 12 as a reference.

As indicated in FIG. 12, mobile phone 111 comprises transmission/reception unit 801, reproduction unit 802, input unit 803, display unit 804, communications control unit 805, speaker 806, and antenna 807.

Mobile phone 111 is a portable telephone device capable of mobile communication using radio waves. Concretely speaking, it is a computer system comprising a microprocessor, a ROM, a RAM, a liquid crystal display unit, a keypad unit, a communications unit, and an antenna. A mobile phone computer program for the management of data regarding communications, keypad, and liquid crystal display functions is stored within the RAM. Mobile phone 111 functions as a result of the microprocessor operating in accordance with this mobile phone computer program.

### (1) Transmission/reception unit 801

Transmission/reception unit 801 comprises a microprocessor and a RAM. Via antenna 807, it transmits and receives information between mobile phone distribution subsystem 109 and reproduction unit 802 as well as between mobile phone distribution subsystem 109 and communications control unit 805.

### (2) Reproduction Unit 802

Concretely speaking, reproduction unit 802 comprises a microprocessor and a RAM. Within the RAM is stored a reproduction computer program. Reproduction unit 802 functions as a result of the microprocessor running the reproduction computer program.

Via transmission/reception unit 801, reproduction unit 802 receives the on-screen program list control information from mobile phone distribution subsystem 109. In accordance with this on-screen program list control information, it produces the on-screen program list. Then, reproduction unit 802 outputs this on-screen program list to display unit 804. Since the on-screen program list produced by reproduction unit 802 is the same as that produced by reproduction unit 474 of PC 108, its explanation is not necessary at this juncture.

Additionally, via transmission/reception unit 801, reproduction unit 802 receives image data, one frame at a time, from mobile phone distribution subsystem 109. Upon each reception, reproduction unit 802 decodes the image data and outputs it to display unit 804.

### (3) Input Unit 803

Input unit 803 comprises a plurality of buttons, such as an "up arrow", a "down arrow", a "menu", and a "select" button, provided on the keypad of mobile phone 111. While on-screen program list 70 shown in FIG.10 is displayed on display unit 804, input unit 803 receives prompts from the user via the various buttons. And in accordance with these prompts, input unit 803 sends an operations signal to display unit 804 via reproduction unit 802.

Additionally, via communications control unit 805, transmission/reception unit 801, and mobile phone network 110, input unit 803 transmits to mobile phone distribution subsystem 109 the program information indicated by the prompts received from the user.

### (4) Display Unit 804

Display unit 804 includes a liquid crystal display on which is displayed the received on-screen program list produced by reproduction unit 802. Additionally, from reproduction unit 802, display unit 804 receives operations signals regarding the various check boxes and radio buttons on the on-screen program list and it displays indicators of these operations signals on the screen. The details regarding this display are the same as on-screen program list 70 of FIG. 10, therefore further description will not be provided here.

Finally, display unit 804 receives decoded image data, one frame at a time, from reproduction unit 802, and for every reception, it displays the received image data.

### 1.7. Structure of Broadcast Subsystem 70

Broadcast subsystem 70 has the same structure as PC distribution subsystem 106 or mobile phone distribution subsystem 109.

Broadcast subsystem 70 receives distribution program structures and raw image data from distribution subsystem 104. And in accordance with these received distribution program structures and raw image data, broadcast subsystem 70 produces structures and raw image data, or segments of image data, in the same fashion as PC distribution subsystem 106 or mobile phone distribution subsystem 109. Then, via broadcast satellite 71, broadcast subsystem 70 broadcasts these produced structures and raw image data, or segments of image data, on digital broadcast waves.

### 1.8. Structure of Digital Broadcast Reception Apparatus 75

Digital broadcast reception apparatus 75 has the same structure as PC 108 and mobile phone 111.

Via broadcast satellite 71, digital broadcast reception apparatus 75 receives the digital broadcast waves broadcast from broadcast subsystem 70. Then it extracts a program from the received digital broadcast wave and reproduces this program in the same manner as mobile phone 111.

Additionally, digital broadcast reception apparatus 75 extracts distribution program structures and raw image data from the received digital broadcast waves and, in like manner to PC 108 produces a program from these distribution program structures and raw image data. Then, it reproduces this produced program.

### 2. Operations of Program Distribution System 10

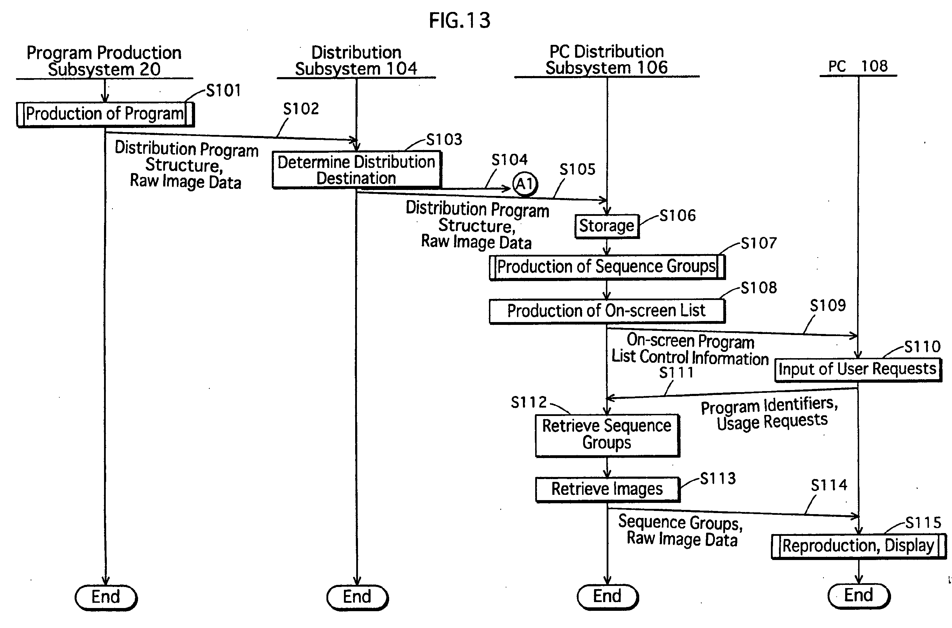

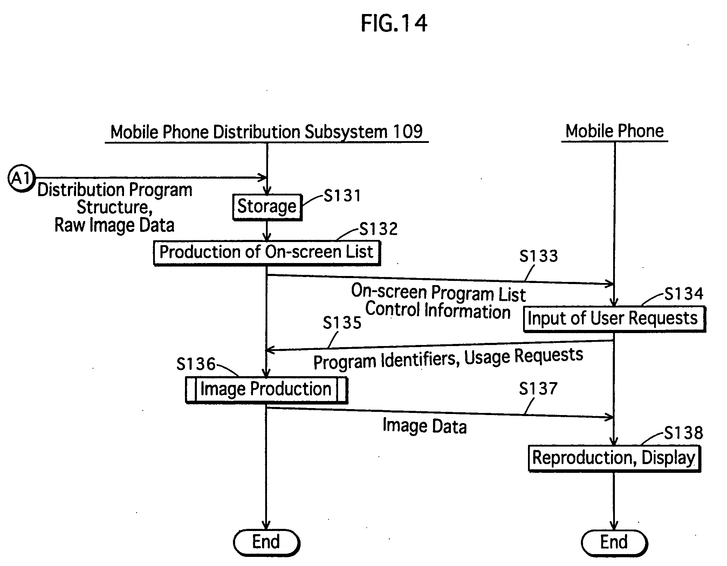

Here, the operations of program distribution subsystem 10 will be explained using the flowcharts of FIG. 13 and 14 as a reference.

Program production subsystem 20 produces a program for secondary distribution (Step S101). Image data provider apparatus 103 of program production subsystem 20 transmits distribution program structures and raw image data to distribution subsystem 104 and distribution subsystem 104 receives these distribution program structures and raw image data (Step S102). Distribution subsystem 104 determines the transmission destination for the received distribution program structures and raw image data (Step S103) and, via internet 105, transmits the distribution program structures and raw image data to the transmission destination, PC distribution subsystem 106, which then receives the distribution program structures and raw image data (Step S105).

PC distribution subsystem 106 then stores in its storage area the received distribution program structures and raw image data (Step S106), and program production unit 403 produces sequence groups (Step S107). Then, program production unit 403 produces on-screen program list control information (Step S108) and, via internet 105, transmits this information to the user's PC 108, which then receives this on-screen program list control information (Step S109).

In accordance with the received on-screen program list, PC 108 receives inputs from the user of program identifiers and program edition requests (Step S110). And, via internet 105, PC 108 transmits these program identifiers and edition requests to PC distribution subsystem 106, which then receives these program identifiers and edition requests (Step S111).

In accordance with the received program identifiers and edition requests, program extraction unit 406 of PC distribution subsystem 106 retrieves a corresponding sequence group stored in program storage unit 404 (Step S112). Then, in accordance with the retrieved sequence group, program extraction unit 406 retrieves raw image data stored in image storage unit 402 (Step S113). Transmission/reception unit 405 then transmits the retrieved sequence group and raw image data to PC 108, which then receives this information (Step S114).

PC 108, in accordance with the received sequence group and raw image data, reproduces image data and displays it (Step S115).

Additionally, via internet 105, distribution subsystem 104 transmits distribution program structures and raw image data to mobile phone distribution subsystem 109, which then receives this information (Step S104).

Mobile phone distribution subsystem 109 stores the received distribution program structures and raw image data within its designated storage space (Step S131). Program production unit 703 produces on-screen program list control information. Transmission/reception unit 704 then, via mobile phone network 110, transmits this produced on-screen program list control information to the user's mobile phone 111, which then receives this information (Step S133).

In accordance with the on-screen program list, mobile phone 111 receives inputs of program identifiers and edition requests from the user (Step S134). Then, via mobile phone network 110, mobile phone 111 transmits the received program identifiers and edition requests to mobile phone distribution subsystem 109, which then receives this information (Step S135).

In accordance with the received program identifiers and edition requests, program production unit 703 of mobile phone distribution subsystem 109 produces image data (Step S136) and transmits that image data to mobile phone 111, which then receives the image data (Step S137).

Mobile phone 111 then reproduces the received image data and displays it (Step S138).

### 2.1. Operations Involved in Program Production Performed by Program Production Subsystem 20.

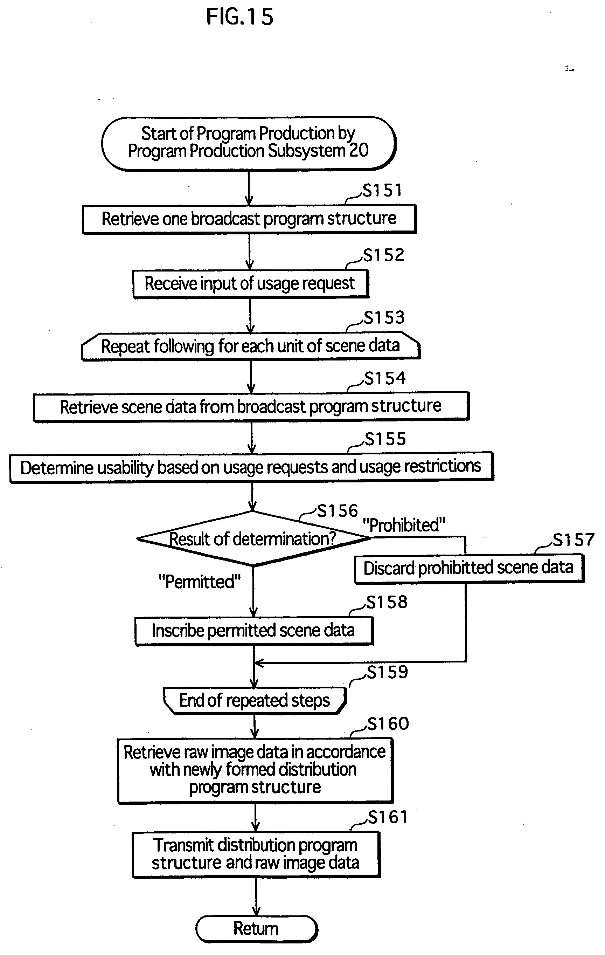

Here, the operations involved in the program production performed by program production subsystem 20 will be explained using the flowchart of FIG. 15 as a reference. The operations explained are the detailed operations within Step S101 in the flowchart of FIG. 13.

Via input unit 241 of distribution program production apparatus 102, media asset management apparatus 101 receives a program structure transfer command and retrieves a broadcast program structure it has stored within (Step S151) to then transfer it to distribution program production apparatus 102. Then, input unit 241 receives inputs of usage requests from the user (Step S152) and writes them onto usage request storage unit 245. Next, Steps S152 through S159 are repeated for each unit of scene data.

Control unit 244 of distribution program production apparatus 102 retrieves scene data from the broadcast program structure received from media asset management apparatus 101 (Step S154). Then, based on a comparison of the usage restriction information included within the scene data and the usage requests stored within usage request storage unit 245, control unit 244 determines whether or not the image scene in question can be used (Step S155).

If the image scene cannot be used (that is, if a "no" is produced in Step S155), the unusable image scene is discarded (Step S157). If the image scene can be used (that is, if a "yes" is produced in Step S155), that scene's data is inscribed (Step S159).

Control unit 244 produces distribution program structures in this manner, and then transmits them to image data provider apparatus 103.

In accordance with the received distribution program structures, extraction unit 293 of image data provider apparatus 103 retrieves raw image data from image data storage unit 294 (Step S160). Then, along with the distribution program structures, extraction unit 293 transmits this raw image data to distribution subsystem 104 (Step S161).

### 2.2. Operations Involved in Production of Sequence Groups by PC Distribution Subsystem 106

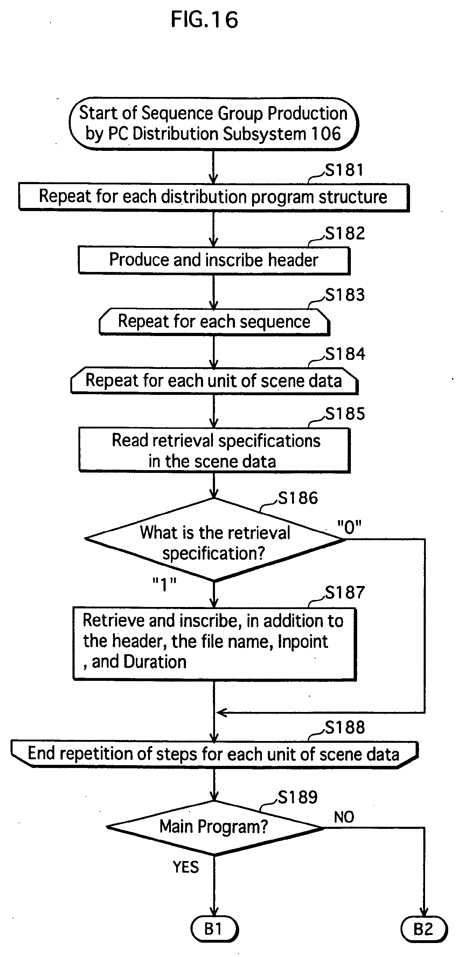

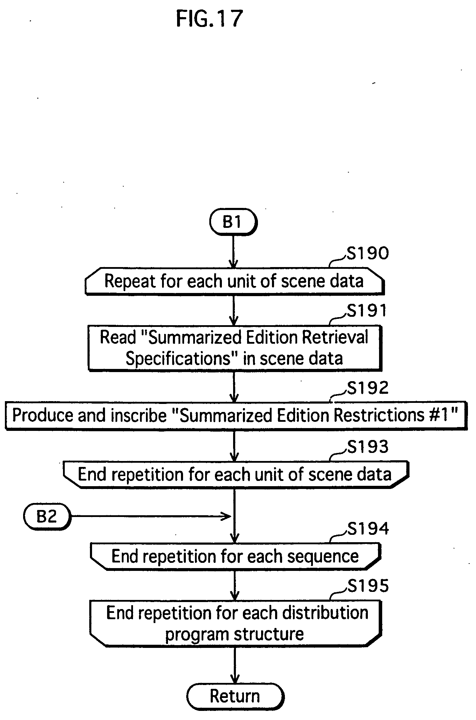

Here, the operations involved in the production of sequence groups by PC distribution subsystem 106 will be explained using the flowcharts of FIGs. 16 and 17 as references. The operations explained are the detailed operations within Step S107 in the flowchart of FIG. 13.

PC distribution subsystem repeats Steps S181 through S195 on each distribution program structure. Program production unit 403 produces a header(Step S182). Then it repeats Steps S183 through S194 for each sequence, and it repeats Steps S184 through S188 for each unit of scene data.

Out of the main program, DC edition, and CM edition retrieval categories indicated in the scene data, program production unit 403 reads the retrieval specifications that correspond to the edition requested (Step 185). If the retrieval specification for the particular edition requested is indicated as a "1", program production unit 403 proceeds to retrieve the file name, inpoint, and duration from the scene data and inscribes this information as a continued attachment to the header produced above (Step S187).

Next, program production unit 403 determines whether the sequence is a "main program". If it is a "main program" (that is, if a "yes" is produced in Step S189), it repeats Steps S190 through S193 on every unit of scene data. Then, program production unit 403 reads the retrieval specification for the summarized program (Step S191) and uses this to produce Summarized Edition Restrictions #1 (Step S192).

### 2.2. Operations Involved in Reproduction and Display Processes in PC 108

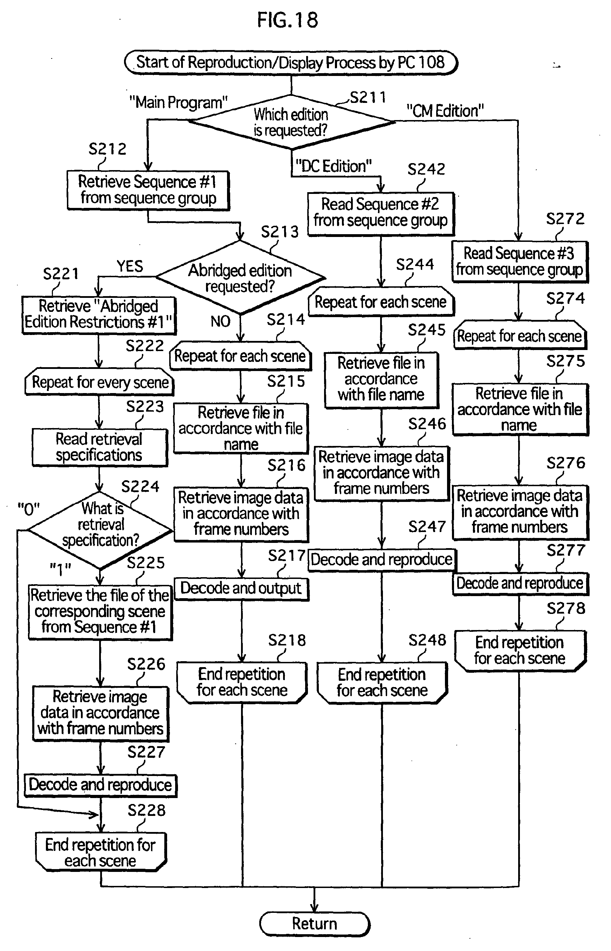

Here, the operations involved in the reproduction and display processes in PC 108 will be explained using the flowchart in FIG. 18 as a reference. The operations explained are the detailed operations within Step S115 in the flowchart of FIG. 13.

Reproduction unit 474 assesses the program identifiers and edition requests received by input unit 472 from the user. When the edition requests indicate "main program" (that is, when "main program" is produced in Step S211), input/output unit 473 retrieves Sequence #1 from the sequence group that includes the same program identifier (Step S212).

Next, reproduction unit 474 determines whether input unit 472 received an edition request indicating "Summarized Edition". If there is no such indication (that is, if Step S213 produces a "no"), reproduction unit 474 repeats Steps S214 through S218. In accordance with the file names included in the sequence group, input/output unit 473 retrieves raw image data from record medium 481 (Step S215). Then, in accordance with the "in" and "dur" indicators, input/output unit 473 retrieves a segment of image data from the retrieved raw image data (Step S216). Reproduction unit 474 then decodes this retrieved segment of image data and outputs it to display unit 475 (Step S217).

And if input unit 472 receives an edition request that indicates a "Summarized Edition" (that is, if a "yes" is produced in Step S213), reproduction unit 474 retrieves Summarized Edition Restrictions #1 from the sequence group (Step S221), and it repeats Steps S222 through S228 for every image scene. Next, reproduction unit 474 reads the retrieval specifications (Step S223). If the retrieval specifications indicate a "1" (that is, if a "yes" is produced in Step S224), input/output unit 473 retrieves from record medium 481 raw image data that corresponds to the file names of the image scenes in Sequence #1 (Step S225). Then, in accordance with the "in" and "dur" indicators, input/output unit 473 retrieves segments of image data from the raw image data (Step S226). Reproduction unit 474 then decodes the retrieved segments of image data and outputs them to display unit 475 (Step S227).

If the edition request received by input unit 472 from the user indicates a "DC edition" (that is, if "DC edition" is produced in Step S211), reproduction unit 474 retrieves segments of image data in accordance with Sequence #2 of the sequence group. And if the edition request received by input unit 472 from the user indicates a "CM edition" (that is, if "CM edition" is produced in Step S211), reproduction unit 474 retrieves segments of image data in accordance with Sequence #3 of the sequence group. In both of these instances, the operations that take place are the same as those for a main program and, therefore, will not be explained further.

### 2.4. Operations Involved in Image Production Process of Mobile Phone Distribution Subsystem 109

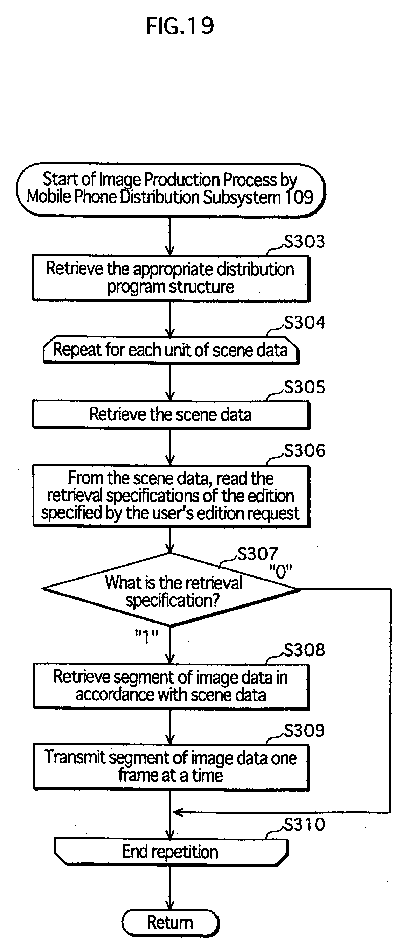

Here, the operations involved in the image production process of mobile phone distribution subsystem 109 will be explained using the flowchart of FIG. 19 as a reference. The operations explained are the detailed operations within Step S136 in the flowchart of FIG. 14.

Program production unit 703 retrieves from image storage unit 702 the distribution program structures that include program identifiers matching the program identifiers received by transmission/reception unit 704 from mobile phone 111 (Step S303). Then program production unit 703 repeats Steps S304 through S310 for each unit of scene data in the retrieved distribution program structures.

Program production unit 703 retrieves the scene data from the distribution program structure (Step S305). Then, from this scene data, it reads the retrieval specifications that correspond to the edition requests received by transmission/reception unit 704 (Step S306). When the retrieval specifications are indicated as being a "1" (that is, when a "1" is produced in Step S307), program production unit 703 retrieves the segment of image data that corresponds to the file name, inpoint and duration indicated in the scene data (Step S308). Then transmission/reception unit 704 transmits this segment of image data, one frame at a time, to mobile phone 111 (Step S309).

### 3. Summary

As explained above, the present invention is a program distribution system comprising: a) a program production apparatus that produces, via a distribution service route, a distribution program intended for distribution via the same distribution service route, the distribution program being based on an original program comprised of a plurality of image scenes; b) a program distribution apparatus for distributing the produced distribution program; and c) a program reproduction apparatus for reproducing the distributed program. The program production apparatus stores, in advance, an original program containing predetermined route restrictions that indicate whether each image scene is permitted to be distributed along certain distribution service routes. The distribution program intended is produced by the process of selecting image scenes permitted by the route restrictions, and it is this distribution program that is then transmitted.

The program distribution apparatus then receives the distribution program, which contains predetermined flag data that indicates for each image scene whether or not that image scene is to be included in the reproduced program. Then, the program distribution apparatus selects image scenes from the distribution program in accordance with these flags to produce a program suited for reproduction. This reproduction program is then transmitted to the program reproduction apparatus.

In addition to receiving the reproduction program from the program distribution apparatus, the program reproduction apparatus receives a plurality of units of raw image data as well as distribution program structures. For every unit of scene data included within these distribution program structures, the program reproduction apparatus uses the flag data within the scene data to determine whether the segment of image data identified by the identifiers in the scene data are to be reproduced. Then it reproduces the segments of image data that are approved for reproduction.

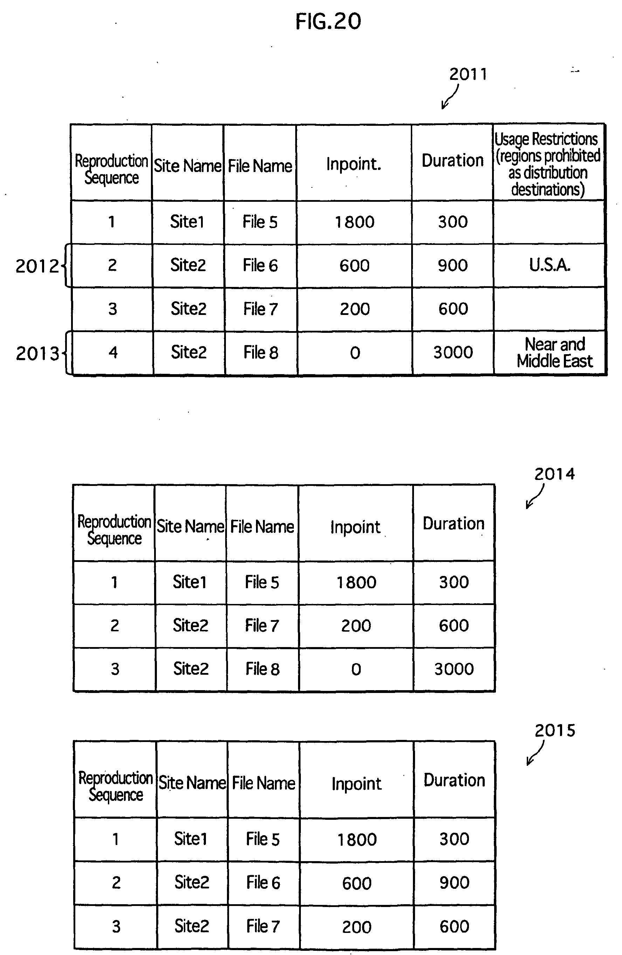

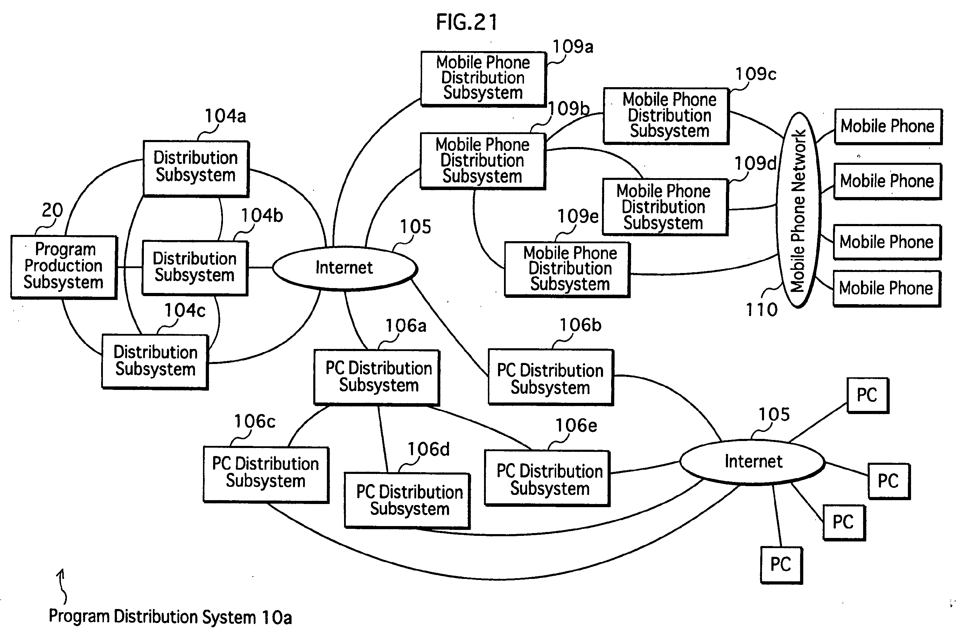

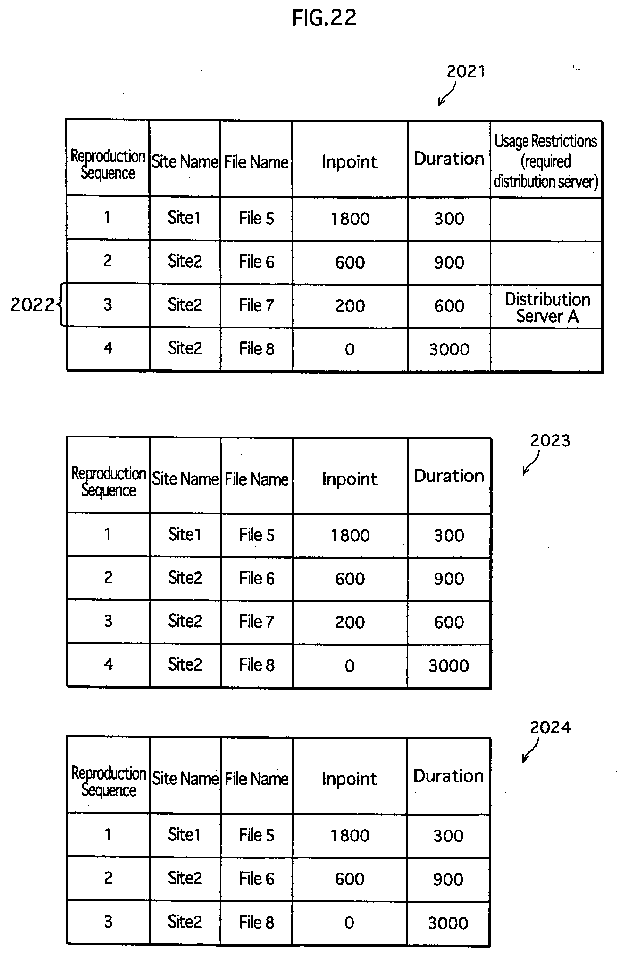

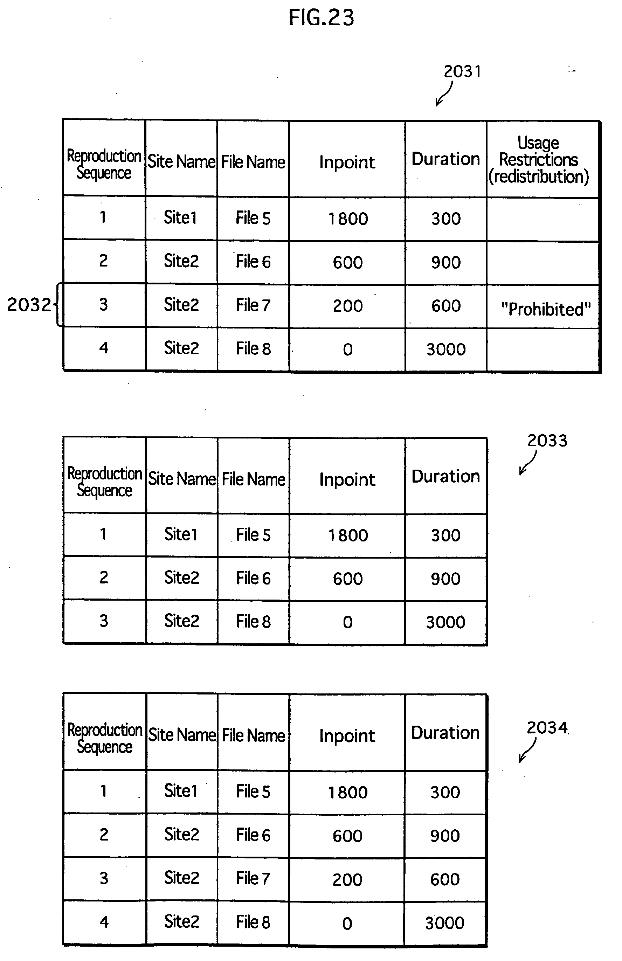

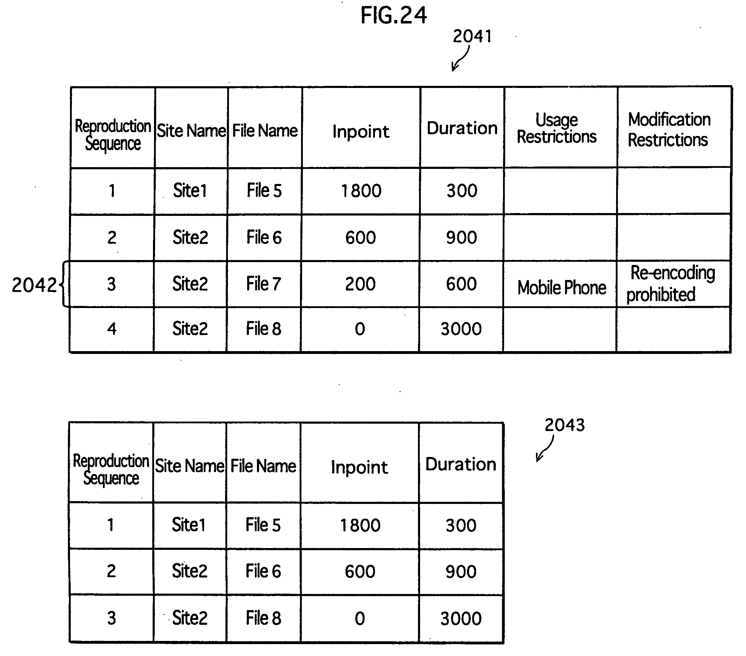

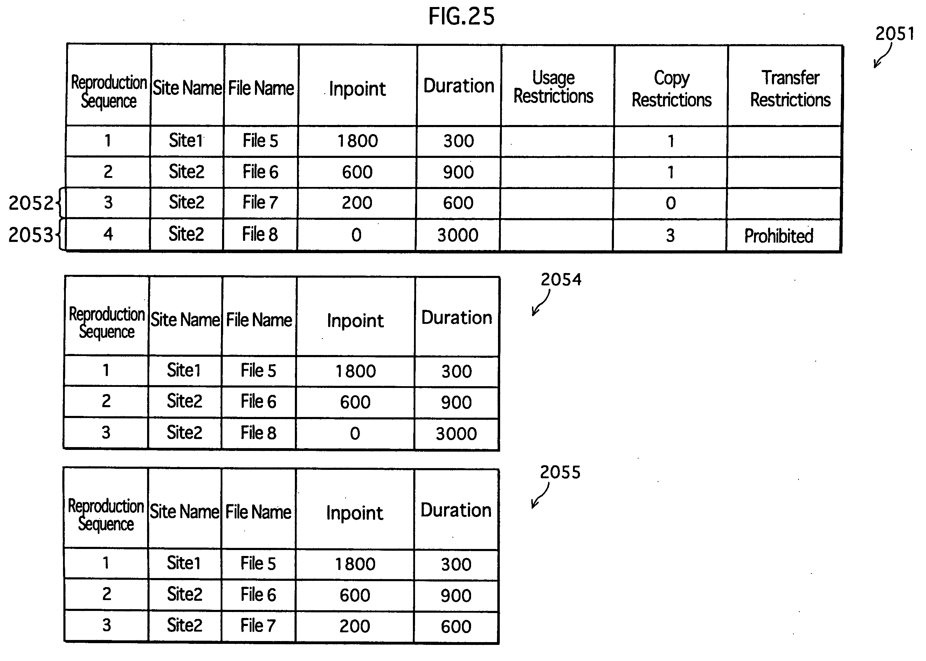

Note that although the present invention was explained using the above description of the preferred embodiment, it is not limited to this design. Below are examples that would also be included in the present invention.
(1) The present invention was described as using a LAN as the means for a) transmitting the broadcast program structures stored in media asset management apparatus 101 to distribution program production apparatus 102 and b) transmitting the distribution program structures from distribution program production apparatus 102 to image data provider apparatus 103. However, the means of transmission need not be limited to a LAN. It is acceptable that the present invention be constructed so that transmission takes place via record media such as a floppy disc, MO, or a CD-ROM.
(2) In the explanation of the embodiment of the present invention, media asset management apparatus 101, distribution program production apparatus 102, and image data provider apparatus 103 were described as being independent computer systems. However, it is acceptable that all three of these apparatuses be included within one computer system.
(3) In the explanation of the embodiment of the present invention, the internet, a mobile phone network, and a satellite digital broadcast network were described as providing the distribution service routes. However, the present invention is not limited to these routes. It is acceptable that distribution take place, for example, via a cable television network, a digital terrestrial broadcasting network, or a DVD-like record medium.
   Also, it is acceptable that the distribution program of the present invention be produced for analog broadcasting despite being based on original program intended for digital broadcasting.
(4) In the explanation of the preferred embodiment of the present invention, the usage restriction information included in the broadcast program structures were described as including information regarding prohibited distribution service routes, but it is also acceptable that the usage restriction information include information regarding a time period during which each image scene can be used. Further, it is acceptable that the usage rights include information regarding the distribution route for each image scene as well as a time period during which an image scene can be used on that particular distribution route. A concrete example can be found in the "Internet 2002.12.1" indicated in the usage rights included in distribution program structure 30 of FIG. 3. This indicates that the image scene in question can be distributed via the internet until December 1, 2002.
(5) It is also acceptable that the usage restriction information be information regarding distribution destinations for each image scene indicating countries or regions as destinations. Below is a concrete example using FIG. 20 as a reference.
   Broadcast program structure 2011 is made up of 4 units of scene data that correspond to 4 image scenes that make up the broadcast program. Each unit of scene data includes its corresponding image scene's reproduction sequence, site name, file name, inpoint, duration, and usage restriction information. The reproduction sequence, site name, file name, inpoint, and duration serve the same functions as those in broadcast program structure 30 in FIG. 3. However, the usage restriction information in structure 2011 vary in that they indicate distribution destinations to which the corresponding image scene may not be distributed. Examples of what might be indicated as the usage restriction information in this case would include countries, multi-country regions, or metropolitan areas, for instance: U.S.A., Japan, Europe, the Near and Middle East, Osaka Prefecture, New York City. If there is nothing indicated in the usage restriction information section, there are no restrictions as to countries or regions to which the program may be distributed. In this example, scene data 2012 has "U.S.A." indicated for its usage restriction information, meaning that the corresponding image scene is not to be distributed to the United States. The usage restrictions for scene data 2013 indicate "Near and Middle East", meaning that the corresponding image scene is not to be distributed to the Near and Middle East.
   In this case, input unit 241 of distribution program production apparatus 102 receives inputs of usage requests that indicate country and regional distribution destinations to which the produced distribution program is to be distributed. Operating in the same manner as in the preferred embodiment, control unit 244 determines whether the usage restrictions of each unit of scene data includes that which was given as the usage request. If the usage restrictions of a particular unit of scene data contain that which was given as the usage request, control unit 244 discards that scene data, and if the usage restrictions of a particular unit of scene data do not contain that which was given as the usage request, it retains that scene data. In this way, control unit 244 produces a distribution program structure that comprises only the retained units of scene data. Distribution program structure 2014 in FIG. 20 is a structure based on broadcast program structure 2013, but produced after the usage request "U.S.A." was inputted. Distribution program structure 2015 is a structure produced after the usage request "Near and Middle East" was inputted.
   Note that in this example, the program identifiers, main program retrieval specifications, DC edition retrieval specifications, CM edition retrieval specifications, and Summarized Edition retrieval specifications have been omitted from broadcast program structure 2011, and distribution program structures 2014 and 2015.
(6) As indicated in FIG. 21, it is also acceptable that program distribution system 10 of the present invention include a plurality of distribution subsystems, a plurality of PC distribution subsystems, and a plurality of mobile phone distribution subsystems. With such an arrangement it is also acceptable that the usage restriction information in the broadcast program structure be information regarding service providers. A concrete explanation will be provided below using FIG. 22 as a reference.
   Broadcast program structure 2021 in FIG. 22 is a structure comprising 4 units of scene data that correspond to the 4 image scenes that make up a broadcast program. Each unit of scene data includes its corresponding image scene's reproduction sequence, site name, file name, inpoint, duration, and usage restriction information. The reproduction sequence, site name, file name, inpoint, and duration serve the same functions as those in broadcast program structure 30 in FIG. 3. However, the usage restriction information in structure 2021 vary in that they indicate a restriction as to the service provider that is to distribute each image scene. If there is nothing indicated in the usage restriction information section, there are no restrictions as to the service provider that is to distribute each image scene. The usage restrictions of scene data 2022 indicate "Distribution Server A", meaning that the corresponding image scene may be distributed only by distribution server A.
   In this case, input unit 241 of distribution program production apparatus 102 receives inputs of usage requests that indicate the name of the service provider that is to distribute the produced distribution program. Control unit 244 produces a distribution program structure by discarding a) the units of scene data that do not include in their usage restriction section the service provider name that was inputted as a usage request, and b) the units of scene data that include in their usage restrictions service provider names other than that which was inputted as a usage request. Distribution program structure 2023 in FIG. 22 is a structure produced based on broadcast program structure 2021 after "Distribution Server A" was inputted as the usage request, and distribution program structure 2024 is a structure produced based on broadcast program structure 2021 after "Distribution Server B" was inputted as the usage request.
   Note that in this example, the program identifiers, main program retrieval specifications, DC edition retrieval specifications, CM edition retrieval specifications, and Summarized Edition retrieval specifications have been omitted from broadcast program structure 2021, and distribution program structures 2023 and 2024.
(7) It is shown in FIG. 21 that the present invention may include subsystems such as PC distribution subsystem 106a and mobile phone distribution subsystem 109b that further distribute distribution program to a plurality of PC distribution subsystems and a plurality of mobile phone distribution subsystems. Here, this type of distribution will be referred to as redistribution. Such redistribution is acceptable in the present invention. Further, it is acceptable in such arrangements that the usage restriction information be information indicating the permissibility of redistribution. A concrete example will be provided below using FIG. 23 as a reference.
   Broadcast program structure 2031 in FIG. 23 is a structure comprising 4 units of scene data that correspond to the 4 image scenes that make up broadcast program. Each unit of scene data includes its corresponding image scene's reproduction sequence, site name, file name, inpoint, duration, and usage restriction information. The reproduction sequence, site name, file name, inpoint, and duration serve the same functions as those in broadcast program structure 30 in FIG. 3. However, the usage restriction information in structure 2021 vary in that they indicate whether redistribution of the image scene that corresponds to the scene data in question is permitted. If redistribution of the corresponding image scene is permitted, nothing is indicated in the usage restriction information section. If redistribution is not permitted, "Prohibited" is indicated in the usage restrictions information section. In the example, since the usage restriction information for scene data 2032 indicate "Prohibited", redistribution of the corresponding image scene will not take place.
   Input unit 241 of distribution program production apparatus 102 receives inputs of usage requests that indicate whether the produced program is to be redistributed. If the usage request information it retrieves from usage request storage unit 245 indicates that redistribution is desired by the user, control unit 244 determines whether each image scene can be used. If "Prohibited" is indicated in the usage restriction section of a particular unit of scene data, that scene data is discarded. In this manner, control unit 244 produces distribution program structure 2033 of FIG. 23 based on broadcast program structure 2031, including only the units of scene data which are permitted to be redistributed.
   However, if the usage restriction information that control unit 244 retrieves from usage request storage unit 245 indicates that redistribution is not desired by the user, all of the image scenes in the broadcast program structure may be used for distribution. In such instances, distribution program structure 2034 is seamlessly produced from broadcast program structure 2031.
   Note that in this example, the program identifiers, main program retrieval specifications, DC edition retrieval specifications, CM edition retrieval specifications, and Summarized Edition retrieval specifications have been omitted from broadcast program structure 2031, and distribution program structures 2033 and 2034.
(8) It is also acceptable that the present invention have a modification restrictions section added to the broadcast program structure. In this case, modification restriction information indicates whether the original image data is permitted to be modified if it is needed to be distributed at a smaller bit rate in order to use a narrower bandwidth. A concrete explanation will be provided below using FIG. 24 as a reference.
   Broadcast program structure 2041 in FIG. 24 is a structure comprising 4 units of scene data that correspond to the 4 image scenes that make up a broadcast program. Each unit of scene data includes its corresponding image scene's reproduction sequence, site name, file name, inpoint, duration, usage restriction information, and modification restrictions. The reproduction sequence, site name, filename, inpoint, duration, and usage restriction information serve the same functions as those in broadcast program structure 30 in FIG. 3. The modification restriction information within broadcast program structure 2042 indicates the corresponding segments of image data that are not permitted to be modified. If nothing is indicated in the modification restrictions section, this means that it is possible to modify the corresponding segment of image data. The modification restrictions section of scene data 2042 indicate "Re-encode", meaning that it is not permissible to re-encode (a form of modification) and distribute the segment of image data.
   Input unit 241 of distribution program production apparatus 102 receives inputs of modification requests that indicate a user's desire to modify of the original image data. Then, input unit 241 outputs these received modification requests to a modification request storage unit. This modification request storage unit serves the same functions as usage request storage unit 245. In the same manner in which it determines the usability of the various units of scene data, control unit 244 determines whether modification is restricted, and it discards the units of scene data whose specifications within its modification restriction section indicate restrictions. In this way, control unit 244 produces distribution program structures by compiling the non-discarded units of scene data. Distribution program structure 2043 in FIG. 24 is a structure produced as a result of an input of "internet" as the usage request indicating the desired distribution route and "re-encode" as the modification request. Control unit 244 conducts this determination of whether modification of the scene data can take place after it determines whether general usage of the scene data can take place.
   Note that in this example, the program identifiers, main program retrieval specifications, DC edition retrieval specifications, CM edition retrieval specifications, and Summarized Edition retrieval specifications have been omitted from broadcast program structure 2041 and distribution program structure 2043.
(9) The present invention can also be designed to include the described embodiment with copy restrictions and transfer restrictions added to the broadcast program structures.
   In this case, "copy restrictions" refers to information that indicates a maximum number of times a particular unit of scene data can be checked out. And, here, "check out" refers to contents and their reproduction rights--both found within a contents-containing apparatus--being replicated within a separate apparatus. The contents-containing apparatus has a designated maximum number of times that this replicating can take place, and each time the contents and their corresponding reproduction rights are replicated in the separate apparatus, this maximum replication number is reduced by 1. However, if a "check in" takes place, this means that the contents reproduction rights in the separate apparatus are returned back to the original contents-containing apparatus. This results in the above-mentioned maximum replication number within the original apparatus being increased by 1. When this "check in" takes place and the reproduction rights are transferred back to the original apparatus, the contents within the separate apparatus become unusable. "Transfer restrictions" refer to information that indicates whether a complete transfer of contents can take place. The process of transferring is similar to the process of copying in that it involves contents and their reproduction rights--both found within a contents-containing apparatus--being replicated within a separate apparatus. This process differs from copying, however, in that the reproduction rights cannot be returned from the separate apparatus to the original apparatus. In a design containing these features, the copy restrictions and transfer restrictions would be predetermined for each image scene that makes up the broadcast program. A concrete explanation of this will be provided below, using FIG. 25 as a reference.
   Broadcast program structure 2051 in FIG. 24 is a structure comprising 4 units of scene data that correspond to the 4 image scenes that make up the broadcast program. Each unit of scene data includes its corresponding image scene's reproduction sequence, site name, file name, inpoint, duration, usage restriction information, copy restrictions, and transfer restrictions. The reproduction sequence, site name, file name, inpoint, duration, and usage restriction information serve the same functions as those in broadcast program structure 30 in FIG. 3. The numbers provided in the copy restriction sections of broadcast program structure 2051 indicate the maximum number of "check outs" permitted for the corresponding segment of image data designated by the scene data. A "0" is indicated as the copy restriction number for scene data 2052, indicating that checking out the designated segment of scene data is impossible. Whereas in the case of scene data 2053, a "3" is indicated as the copy restriction number, indicating that checking out is permissible up to 3 times. In the transfer restriction sections of this broadcast program structure 2051, no information is provided, so transferring of the corresponding segment of image data is permitted. However, when transfer is not permitted, the word "Prohibited" is provided in the transfer restriction section. Such is the case for scene data 2053, indicating that the corresponding segment of image data may not be transferred to a separate apparatus.
   Input unit 241 of distribution program production apparatus 102 receives inputs of copy requests from the user that indicate the number of checkouts desired for the distribution program that is to be produced. Then input unit 241 outputs these copy requests to a copy request storage unit. In this case, the copy request storage unit has the same structure and serves the same functions as usage request storage unit 245. Control unit 244 assesses each unit of scene data to determine whether the number of checkouts requested exceeds the number of checkouts permitted in the copy restriction section of the unit of scene data in question. If the number requested exceeds the number permitted, that particular unit of scene data is discarded. If the number of checkouts permitted is greater than or equal to the number of checkouts requested, that particular scene data is used to produce the distribution program structure. Only scene data that meets this latter qualification is used to produce the distribution program structure in this case. Additionally, input unit 241 of distribution program production apparatus 102 receives inputs of transfer requests that indicate whether it is desired that the distribution program to be produced be transferred. Then input unit 241 outputs these requests to a transfer request storage unit. Here, the transfer request storage unit has the same structure and serves the same functions as usage request storage unit 245. Control unit 244 then retrieves these transfer requests from the transfer request storage unit and refers to the transfer restrictions indicated for each unit of scene data to determine whether those units of scene data can be transferred. If the transfer restrictions section of a particular unit of scene data reads "Prohibited", control unit 244 discards that unit of scene data.
   And if the transfer request retrieved by control unit 244 from the transfer request storage unit indicates that transfer is not desired by the user, each image scene included within the broadcast program structure may be distributed.
   Distribution program structure 2054 in FIG. 25 is a structure produced based on distribution program structure 2051 after the following inputs were received: "internet" as the usage request for the distribution route, "1" as the number of copies requested, and "0" as the number of transfers requested. Distribution program structure 2055 is a structure after the following inputs were received: "internet" as the usage request for the distribution route, "0" as the number of copies requested, and "1" as the number of transfers requested. Control unit 244 uses these requests and assesses them in relation to their respective restriction information in each unit of scene data within the broadcast program structure to determine whether the scene data can be included in the distribution program structure.
   Note that in this example, the program identifiers, main program retrieval specifications, DC edition retrieval specifications, CM edition retrieval specifications, and Summarized Edition retrieval specifications have been omitted from broadcast program structure 2051 and distribution program structures 2054 and 2055.
(10) Although the explained embodiment of the present invention was described as having 4 editions--"main program", "DC edition", "CM edition", and "Summarized Edition"--as the editions that could be retrieved, the present invention is not limited to these.
   For example, it would be acceptable for the present invention to be designed so that there be a set monetary charge for the reproduction of each image scene. In such an instance, it would be acceptable if the charges for the reproduction of each scene by the user were added up to result in an overall charge for the reproduced program.
(11) It would be acceptable that the described embodiment of the present invention be designed so that the reproduction computer program is transferred from PC distribution subsystem 106 via internet 105 to PC 108, where the computer program is run.
(12) The present invention can operate according to the methods described thus far, or it is acceptable that the present invention be in the form of a computer program operated by a computer, or it can be digital signals generated by the computer program.
   Additionally, with the present invention, it is acceptable that the above-mentioned computer program or digital signals be stored on a record medium whose information is computer retrievable. Such a storage medium could be a floppy disk, hard disk, CD-ROM, MO, DVD, DVD-ROM, DVD-RAM, or a semiconductor memory. Also, it is acceptable that the above-mentioned computer program or digital signals be transmitted via a network such as an electrical communications circuit, a wireless or wired communications circuit, or the internet.
   Additionally, it is acceptable that the present invention be a computer system provided with a microprocessor and a memory, wherein the memory has the above-mentioned computer program stored within and the microprocessor operates in accordance with the stored computer program.
   Additionally, it is acceptable that, either via some sort of network or by being recorded onto a record medium that is then transferred, the above-mentioned computer program or digital signals can be carried out on another independent computer.
(13) It is acceptable that the present invention be any combination or assembly of the above embodiment and variations of the embodiment.

## Claims

1. A program production apparatus, comprising:
a storage unit that stores, in advance, an original program, the original program including a plurality of image scenes and a set of usage information for each of the image scenes; and
a production unit that produces a distribution program by selecting, in accordance with the set of usage information, one or more image scenes from the original program,
wherein the set of usage information includes one of a) whether the corresponding image scene is permitted to be distributed to specified distribution routes and b) whether the corresponding image scene is permitted to be distributed to specified distribution destinations.

2. The program production apparatus of Claim 1, wherein
the usage information includes at least whether the corresponding image scene is permitted to be distributed to specified distribution routes,
and the production unit includes:
a reception sub-unit that receives route information that indicates a distribution route;
a determining sub-unit that refers to the usage information to determine whether each of the image scenes in the original program is permitted to be distributed via the distribution route indicated in the received route information; and
a distribution program production sub-unit that produces a distribution program corresponding to the distribution route.

3. The program production apparatus of Claim 2, wherein
the original program includes a) a plurality of pieces of raw image data, each piece of raw image data including a plurality of segments of image data, and each of one or more of the segments of image data corresponding to one image scene within the original program, and b) an original program structure that includes a plurality of sets of scene data, each set of scene data including i) image data segment identifiers that each identify a segment of image data that makes up an image scene, and ii) the usage information,
the determining sub-unit determines, for each set of scene data, whether the segment of image data identified by the scene identifier is permitted to be distributed, and
the distribution program production sub-unit produces a distribution program, from the original program, composed of a) raw image data to which the segments of image data determined by the determining sub-unit to be permitted to be distributed belong and b) the image data segment identifiers that identify the segments of image data determined by the determining unit to be permitted to be distributed.

4. The program production apparatus of Claim 1, wherein
the program production apparatus distributes the distribution program to a reproduction apparatus via a distribution apparatus,
the usage information stored by the storage unit is destination restriction information indicating whether distribution of the program to a specified geographic region is permitted, and
the production unit produces the distribution program in accordance with the distribution restriction information.

5. The program production apparatus of Claim 1, wherein
the program production apparatus distributes the distribution program to a reproduction apparatus via a distribution apparatus,
the usage information stored by the storage unit is distribution apparatus restriction information indicating whether each image scene is permitted to be distributed to the distribution apparatus, and
the production unit produces the distribution program in accordance with the distribution apparatus restriction information.

6. The program production apparatus of Claim 1, wherein
the program production apparatus distributes the distribution program to a reproduction apparatus via a distribution apparatus and a redistribution apparatus, in the stated order,
the usage information stored by the storage unit is redistribution apparatus restriction information indicating whether each image scene is permitted to be redistributed via the redistribution apparatus, and
the production unit produces the distribution program in accordance with the redistribution apparatus restriction information.

7. The program production apparatus of Claim 1, wherein
the original program further includes modification restriction information indicating whether each image scene is permitted to be modified, and
the production unit produces the distribution program in accordance with the modification restriction information and the usage information.

8. The program production apparatus of Claim 1, wherein
the original program further includes copy restriction information indicating whether each image scene is permitted to be copied, and
the production unit produces the distribution program in accordance with the copy restriction information and the usage information.

9. A program distribution apparatus that receives a distribution program made up of one or more image scenes, produces a program for reproduction from the received distribution program, and distributes the produced program for reproduction, comprising:
a reception unit that receives the distribution program, the distribution program including, for each scene, flag information showing whether the scene is permitted to be reproduced;
a production unit that produces the program for reproduction by selecting, in accordance with the flag information, image scenes from the distribution program; and
a transmission unit that transmits the produced program for reproduction to a reproduction apparatus.

10. The program distribution apparatus of Claim 9, wherein
the distribution program further includes a) a plurality of pieces of raw image data, each piece of raw image data including a plurality of segments of image data, and each of one or more segments corresponding to one image scene within the distribution program, and b) a distribution program structure that includes a plurality of image data segment identifiers, each image data identifier i) identifying a segment of image data and ii) including the flag information, and
the production unit includes:
a determining sub-unit that uses the flag information to determine whether the segments of image data identified by the image data segment identifiers are permitted to be reproduced; and
an output sub-unit that outputs the segments of image data determined to be permitted to be reproduced.

11. The program distribution apparatus of Claim 9, wherein
the distribution program further includes a) a plurality of pieces of raw image data, each piece of raw image data including a plurality of segments of image data, and each of one or more segments corresponding to one image scene within the distribution program, and b) a distribution program structure that includes a plurality of image data segment identifiers, each image data segment identifier i) identifying a segment of image data and ii) including the flag information, and
the production unit including:
a determining sub-unit that uses the flag information to determine whether the segments of image data identified by the image data segment identifiers are permitted to be reproduced; and
an output sub-unit that outputs a) raw image data that includes the segments of image data determined to be permitted to be reproduced and b) the image data segment identifiers that identify the segments of image data determined to be permitted to be reproduced.

12. The program distribution apparatus of Claim 9, wherein
the distribution program further includes modification restriction information indicating whether each image scene is permitted to be modified, and
the production unit produces the distribution program in accordance with the modification restriction information and the flag information.

13. A program reproduction apparatus that receives, from a program distribution apparatus, a distribution program that is made up of a plurality of image scenes, and reproduces the received distribution program,
the distribution program including a) a plurality of pieces of raw image data, each piece of raw image data including a plurality of segments of image data, and each of one or more segments corresponding to one image scene within the distribution program and b) a distribution program structure that includes a plurality of sets of scene data, each set of scene data including i) a plurality of image data segment identifiers that each identify one of the segments of image data, and ii) flag information indicating whether the identified segment of image data is permitted to be reproduced, and
the program reproduction apparatus comprising:
a reception unit that receives the distribution program from the program distribution apparatus;
a determining unit that uses the flag information to determine whether the segments of image data identified by the image data segment identifiers are permitted to be reproduced; and
a reproduction unit that reproduces the segments of image data determined to be permitted to be reproduced.

14. The program reproduction apparatus of Claim 13, wherein
the distribution program structure further includes copy restriction information indicating whether each image scene is permitted to be copied to a another program reproduction apparatus, and
the program apparatus further includes:
a copy prohibiting unit that, in accordance with the copy restriction information, prohibits copying to another program reproduction apparatus.

15. A program distribution system including a program production apparatus, a program distribution apparatus, and a program reproduction apparatus that are connected via a network, the program production apparatus comprising:
a storage unit that stores, in advance, an original program, the original program including a plurality of image scenes and a set of usage information for each of the image scenes, each of the plurality of image scenes including usage information indicating one of a) whether the corresponding image scene is permitted to be distributed to specified distribution routes, and b) whether the corresponding image scene is permitted to be distributed to specified distribution destinations;
a first production unit that produces a distribution program by selecting, in accordance with the set of usage information, one or more image scenes from the original program;
and a first transmission unit that transmits the distribution program to the program distribution apparatus,
the program distribution apparatus comprising:
a first reception unit that receives the distribution program from the first transmission unit, the distribution program including, for each image scene, flag information indicating whether the image scene is permitted to be reproduced;
a second production unit that produces a program for reproduction by, in accordance with the flag information, selecting image scenes from the distribution program; and
a second transmission unit that transmits the produced program for reproduction to the program reproduction apparatus,
wherein the program reproduction apparatus receives the program for reproduction and reproduces the received program for reproduction.

16. A program production distribution apparatus, comprising:
a storage unit that stores, in advance, an original program, the original program including a plurality of image scenes and a set of usage information for each of the image scenes showing whether the image scene is permitted to be distributed to a specified distribution destination;
a production unit that produces a distribution program by selecting, in accordance with the set of usage information, one or more image scenes from the original program; and
a distribution unit that distributes the distribution program via the specified distribution route,
wherein the set of usage information includes one of a) whether the corresponding image scene is permitted to be distributed to specified distribution routes and b) whether the corresponding image scene is permitted to be distributed to specified distribution destinations.

17. A program production method used in a program production apparatus that includes a storage unit that stores, in advance, an original program that includes a plurality of image scenes and a set of usage information for each of the image scenes, the program production method comprising:
a production step for producing a distribution program by selecting, in accordance with the set of usage information, one or more image scenes from the original program,
wherein the set of usage information includes one of a) whether the corresponding image scene is permitted to be distributed to specified distribution routes and b) whether the corresponding image scene is permitted to be distributed to specified distribution destinations.

18. A program production computer program used in a program production apparatus that includes a storage unit for storing, in advance, an original program that includes a plurality of image scenes and a set of usage information for each of the image scenes, the program production computer program comprising:
a production step for producing a distribution program by selecting, in accordance with the set of usage information, one or more image scenes from the original program,
wherein the set of usage information includes one of a) whether the corresponding image scene is permitted to be distributed to specified distribution routes and b) whether the corresponding image scene is permitted to be distributed to specified distribution destinations.

19. A computer-readable recording medium on which is stored a program production computer program used by a program production apparatus that includes a storage unit that stores, in advance, an original program that includes a plurality of image scenes and a set of usage information for each of the image scenes, the program production computer program comprising:
a production step for producing a distribution program by selecting, in accordance with the set of usage information, one or more image scenes from the original program,
wherein the set of usage information includes one of a) whether the corresponding image scene is permitted to be distributed to specified distribution routes and b) whether the corresponding image scene is permitted to be distributed to specified distribution destinations.

20. A program distribution method used by a program distribution apparatus that receives a distribution program made up of one or more image scenes, produces a program for reproduction from the received distribution program, and distributes the produced program for reproduction, comprising:
a reception step for receiving the distribution program, the distribution program including, for each scene, flag information showing whether the scene is permitted to be reproduced;
a production step for producing the program for reproduction by selecting, in accordance with the flag information, image scenes from the distribution program; and
a transmission step for transmitting the produced program for reproduction to a reproduction apparatus.

21. A program distribution computer program used by a program distribution apparatus that receives a distribution program made up of one or more image scenes, produces a program for reproduction from the received distribution program, and distributes the produced program for reproduction, comprising:
a reception step for receiving the distribution program, the distribution program including, for each scene, flag information showing whether the scene is permitted to be reproduced;
a production step for producing the program for reproduction by selecting, in accordance with the flag information, image scenes from the distribution program; and
a transmission step for transmitting the produced program for reproduction to a reproduction apparatus.

22. A computer-readable recording medium on which is stored a program distribution computer program used by a program distribution apparatus that receives a distribution program made up of one or more image scenes, produces a program for reproduction from the received distribution program, and distributes the produced program for reproduction, the program distribution computer program comprising:
a reception step for receiving the distribution program, the distribution program including, for each scene, flag information showing whether the scene is permitted to be reproduced;
a production step for producing the program for reproduction by selecting, in accordance with the flag information, image scenes from the distribution program; and
a transmission step for transmitting the produced program for reproduction to a reproduction apparatus.

23. A program reproduction method used by a program reproduction apparatus that receives, from a program distribution apparatus, a distribution program that is made up of a plurality of image scenes, and reproduces the received distribution program, the distribution program including a) a plurality of pieces of raw image data, each piece of raw image data including a plurality of segments of image data, and each of one or more segments corresponding to one image scene within the distribution program and b) a distribution program structure that includes a plurality of sets of scene data, each set of scene data including i) a plurality of image data segment identifiers, each image data segment identifier identifying one of the segments of image data, and ii) flag information indicating whether the identified segment of image data is permitted to be reproduced, the program reproduction method comprising:
a reception step for receiving the distribution program from the program distribution apparatus;
a determining step for using the flag information to determine whether the segments of image data identified by the image data segment identifiers are permitted to be reproduced; and
a reproduction step for reproducing the segments of image data determined to be permitted to be reproduced.

24. A program reproduction computer program used by a program reproduction apparatus that receives, from a program distribution apparatus, a distribution program that is made up of a plurality of image scenes, and reproduces the received distribution program, the distribution program including a) a plurality of pieces of raw image data, each piece of raw image data including a plurality of segments of image data, and each of one or more segments corresponding to one image scene within the distribution program and b) a distribution program structure that includes a plurality of sets of scene data, each set of scene data including i) a plurality of image data segment identifiers, each image data segment identifier identifying one of the segments of image data, and ii) flag information indicating whether the identified segment of image data is permitted to be reproduced, the program reproduction method comprising:
a reception step for receiving the distribution program from the program distribution apparatus;
a determining step for using the flag information to determine whether the segments of image data identified by the image data segment identifiers are permitted to be reproduced; and
a reproduction step for reproducing the segments of image data determined to be permitted to be reproduced.

25. A computer-readable recording medium on which is stored a program reproduction computer program used by a program reproduction apparatus that receives, from a program distribution apparatus, a distribution program that is made up of a plurality of image scenes, and reproduces the received distribution program, the distribution program including a) a plurality of pieces of raw image data, each piece of raw image data including a plurality of segments of image data, and each of one or more segments corresponding to one image scene within the distribution program and b) a distribution program structure that includes a plurality of sets of scene data, each set of scene data including i) a plurality of image data segment identifiers, each image data segment identifier identifying one of the segments of image data, and ii) flag information indicating whether the identified segment of image data is permitted to be reproduced, the program reproduction method comprising:
a reception step for receiving the distribution program from the program distribution apparatus;
a determining step for using the flag information to determine whether the segments of image data identified by the image data segment identifiers are permitted to be reproduced; and
a reproduction step for reproducing the segments of image data determined to be permitted to be reproduced.
